(19) Europäisches Patentamt
European Patent Office
Office européen des brevets

(11) **EP 4 414 682 A1**

(12) **EUROPEAN PATENT APPLICATION**
published in accordance with Art. 153(4) EPC

(43) Date of publication:
**14.08.2024 Bulletin 2024/33**

(21) Application number: **22878643.0**

(22) Date of filing: **07.10.2022**

(51) International Patent Classification (IPC):
***G01M 17/10*** *(2006.01)*

(52) Cooperative Patent Classification (CPC):
**G01M 17/10**

(86) International application number:
**PCT/JP2022/037742**

(87) International publication number:
**WO 2023/058776 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.10.2021  JP 2021166505**

(71) Applicant: **Kokusai Keisokuki Kabushiki Kaisha
Tama-shi, Tokyo 206-0025 (JP)**

(72) Inventors:
• **MATSUMOTO Sigeru
Tama-shi, Tokyo 206-0025 (JP)**
• **MATSUMOTO Shinichi
Tama-shi, Tokyo 206-0025 (JP)**
• **MIYASHITA Hiroshi
Tama-shi, Tokyo 206-0025 (JP)**
• **MURAUCHI Kazuhiro
Tama-shi, Tokyo 206-0025 (JP)**
• **TOKITA Shuichi
Tama-shi, Tokyo 206-0025 (JP)**

(74) Representative: **Lewis Silkin LLP
Arbor
255 Blackfriars Road
London SE1 9AX (GB)**

(54) **VEHICLE WHEEL TEST SYSTEM**

(57)    An object of the present invention is to provide a wheel testing device capable of performing a test closer to an actual travelling state.

A wheel testing system according to an embodiment of the present invention includes a first testing device including a rail on which a test wheel rolls, a second testing device including a rail wheel that rotates together with the test wheel while being in contact with the test wheel, and a test data processing device that processes test data obtained by the first testing device and the second testing device, wherein the test data processing device converts a test result by the second testing device into a test result by the first testing device based on the test result by the first testing device and the test result by the second testing device.

FIG. 1

EP 4 414 682 A1

## Description

### TECHNICAL FIELD

The present invention relates to a wheel testing system suitable for testing wheels for railroad.

### BACKGROUND ART

Testing devices for simulating an interaction between a rail and a wheel when a railroad vehicle is traveling are known. For example, Patent Document 1 discloses a testing device capable of performing a test in which a travelling state of a railroad vehicle is simulated by rotating both the wheel and a rail wheel, which is a disk-shaped member having a cross-sectional shape simulating a rail on an outer periphery thereof, in a state where the wheel is pressed against the rail wheel.

### PRIOR ART DOCUMENT

### PATENT DOCUMENT

[Patent Document 1] Japanese Patent Application Publication No. 2007-271447

### SUMMARY OF THE INVENTION

### PROBLEM TO BE SOLVED BY THE INVENTION

In the testing device disclosed in Patent Document 1, since a rail top surface in contact with the wheel is a substantially cylindrical surface having a curvature in a longitudinal section (i.e., a section perpendicular to an axle), there has been a problem that it is not possible to accurately reproduce an actual traveling state of a railroad vehicle traveling on a rail whose rail top surface does not have a curvature in the longitudinal section.

The present invention has been made in view of the above circumstances, and it is an object of the present invention to provide a wheel testing device capable of performing a test that is closer to the actual traveling state.

### MEANS FOR SOLVING THE PROBLEM

According to an embodiment of the present invention, there is provided a wheel testing system including a first testing device including a rail on which a test wheel rolls, a second testing device including a rail wheel that rotates together with the test wheel while being in contact with the test wheel, and a test data processing device that processes test data obtained by the first testing device and the second testing device. The test data processing device converts a test result by the second testing device into a test result by the first testing device based on the test result by the first testing device and the test result by the second testing device.

### EFFECT OF THE INVENTION

According to an embodiment of the present invention, there is provided a wheel testing device capable of performing a test that is closer to an actual traveling state.

### BRIEF DESCRIPTION OF THE DRAWINGS

[FIG. 1] FIG. 1 is a left side view of a rail-type wheel testing device according to a first embodiment of the present invention.
[FIG. 2] FIG. 2 is a plan view of the rail-type wheel testing device according to the first embodiment of the present invention.
[FIG. 3] FIG. 3 is a rear view of the rail-type wheel testing device according to the first embodiment of the present invention.
[FIG. 4] FIG. 4 is an enlarged view (left side view) of the rail-type wheel testing device according to the first embodiment of the present invention.
[FIG. 5] FIG. 5 is an enlarged view (plan view) of the rail-type wheel testing device according to the first embodiment of the present invention.
[FIG. 6] FIG. 6 shows an arrangement of guide mechanisms.
[FIG. 7] FIG. 7 is a cross-sectional view of a guide mechanism (type A).
[FIG. 8] FIG. 8 is a cross-sectional view of a guide mechanism (type B).
[FIG. 9] FIG. 9 is a diagram showing a connecting portion of a rail member.
[FIG. 10] FIG. 10 is a block diagram showing a schematic logical configuration of a drive system.
[FIG. 11] FIG. 11 is a diagram showing a schematic mechanical configuration of a main section of the drive system.
[FIG. 12] FIG. 12 is a diagram showing schematic structures of a drive part and a drive pulley part.
[FIG. 13] FIG. 13 is a plan view of a first driven part.
[FIG. 14] FIG. 14 is a cross-sectional view taken along line A-A of FIG. 13.
[FIG. 15] FIG. 15 is a cross-sectional view taken along line B-B of FIG. 13.
[FIG. 16] FIG. 16 is a cross-sectional view taken along line C-C of FIG. 13.
[FIG. 17] FIG. 17 is a cross-sectional view of a second driven part.
[FIG. 18] FIG. 18 is a cross-sectional view of a torque applying part.
[FIG. 19] FIG. 19 is a diagram showing a schematic structure of an alignment part 40.
[FIG. 20] FIG. 20 is an arrow view A-A of FIG. 19.
[FIG. 21] FIG. 21 is an arrow view B-B of FIG. 19.
[FIG. 22] FIG. 22 is an arrow view C-C of FIG. 19.
[FIG. 23] FIG. 23 is an arrow view D-D of FIG. 19.

[FIG. 24] FIG. 24 is a diagram showing a schematic structure of a spindle part.

[FIG. 25] FIG. 25 is a block diagram showing a schematic configuration of a control system.

[FIG. 26] FIG. 26 is a perspective view of a rail wheel testing device according to a second embodiment of the present invention.

[FIG. 27] FIG. 27 is a perspective view of the rail wheel testing device according to the second embodiment of the present invention.

[FIG. 28] FIG. 28 is a plan view of the rail wheel testing device according to the second embodiment of the present invention.

[FIG. 29] FIG. 29 is a block diagram showing a schematic configuration of a drive system.

[FIG. 30] FIG. 30 is a cross-sectional view showing a schematic configuration of a gearbox.

[FIG. 31] FIG. 31 is a cross-sectional view showing a schematic configuration of a torque generator and its surroundings.

[FIG. 32] FIG. 32 is a cross-sectional view showing a schematic configuration of a second electric motor.

[FIG. 33] FIG. 33 is a block diagram showing a schematic configuration of a control system.

[FIG. 34] FIG. 34 is a plan view showing a schematic configuration of the wheel testing device according to the second embodiment of the present invention.

[FIG. 35] FIG. 35 is a front view showing a schematic configuration of the wheel testing device according to the second embodiment of the present invention.

## EMBODIMENTS FOR CARRYING OUT THE INVENTION

Hereinafter, an embodiment of the present invention will be described with reference to the drawings. In the following description, the same or corresponding reference numerals are given to the same or corresponding items, and redundant description are omitted. In each of the drawings, when a plurality of items whose reference numerals are the same are shown, the reference numerals are not necessarily shown for all of the plurality of shown items, and the reference numerals are appropriately omitted for a part of the plurality of shown items. In each of the drawings, for convenience of description, some of the components are omitted or shown in cross sections.

A wheel testing system according to an embodiment of the present invention described below is suitable for testing adhesion characteristics between a rail and a wheel. The wheel testing system of the present embodiment includes a rail-type (or flat-type) wheel testing device 1 (hereinafter referred to as "first testing device 1") in which a rail is used and a rail wheel-type wheel testing device 2 (hereinafter referred to as "second testing device 2") in which a rail wheel is used. By using these two types of wheel testing devices together, the adhesion characteristics can be accurately measured over a wide speed range from a low speed range (e.g., 0 to 40 km/h) to a high speed range (e.g., 60 to 200 km/h).

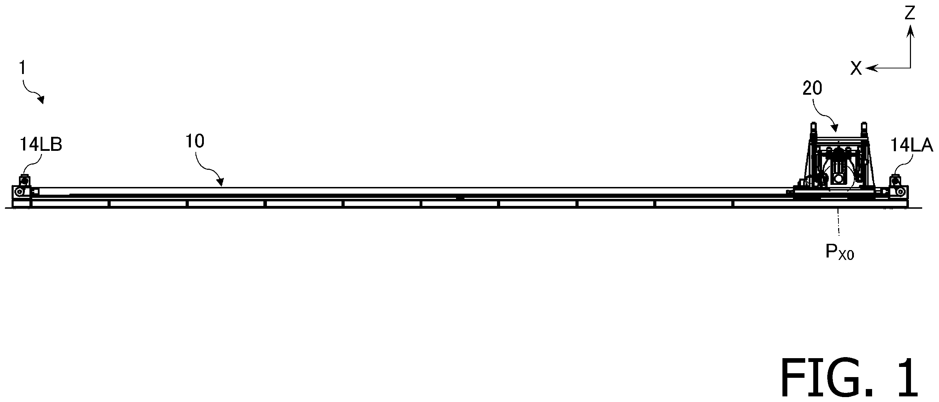

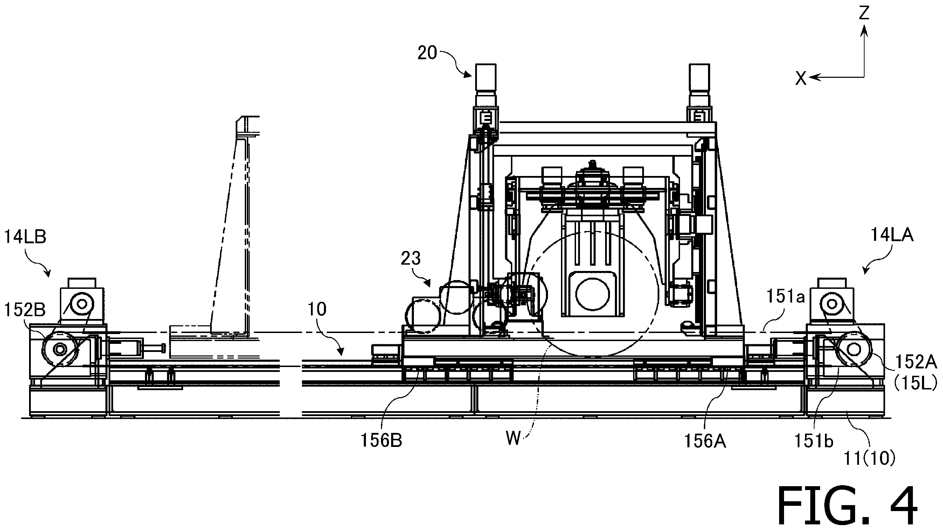

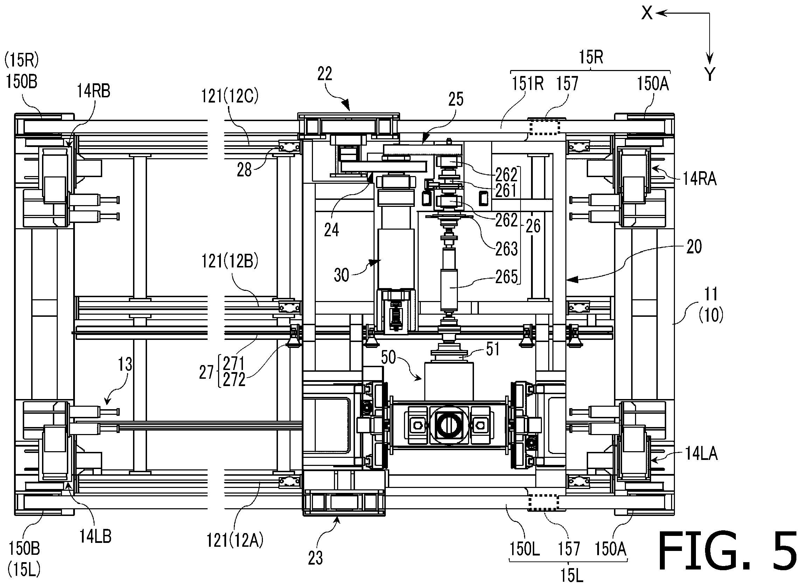

FIGS. 1 to 3 are a left side view, a plan view, and a rear view, respectively, of the first testing device 1 according to an embodiment of the present invention, and FIGS. 4 and 5 are a left side view and a plan view, respectively, of an enlarged main portion of the first testing device 1.

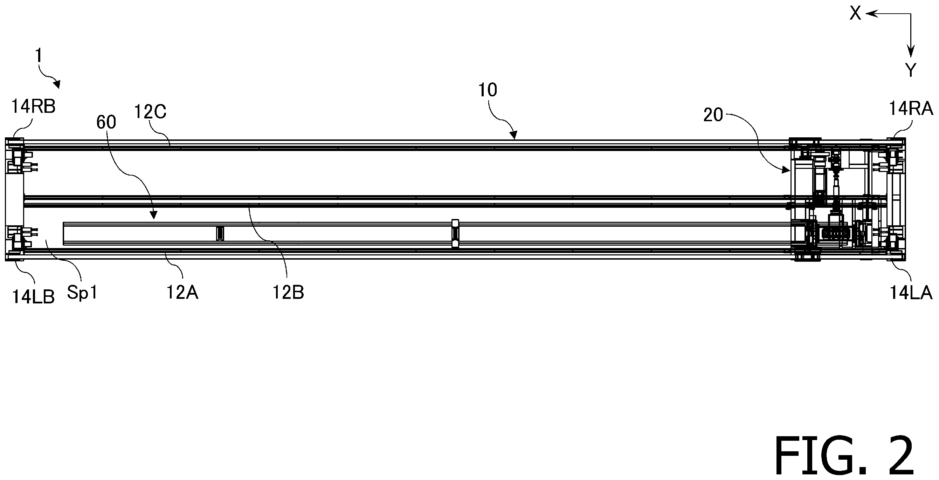

In the plan views (FIGS. 2 and 5), a direction from right to left is defined as an X-axis direction, a direction from top to bottom is defined as a Y-axis direction, and a direction perpendicular to the paper surface from back to front is defined as a Z-axis direction. The X-axis direction and the Y-axis direction are horizontal directions orthogonal to each other, and the Z-axis direction is a vertical direction. Unless otherwise specified, the front-rear, left-right, and top-bottom directions is defined as directions when looking in a traveling direction of a carriage 20 (X-axis positive direction). That is, the X-axis positive direction is referred to as front, the X-axis negative direction is referred to as back, the Y-axis positive direction is referred to as left, the Y-axis negative direction is referred to as right, the Z-axis positive direction is referred to as top, and the Z-axis negative direction is referred to as bottom.

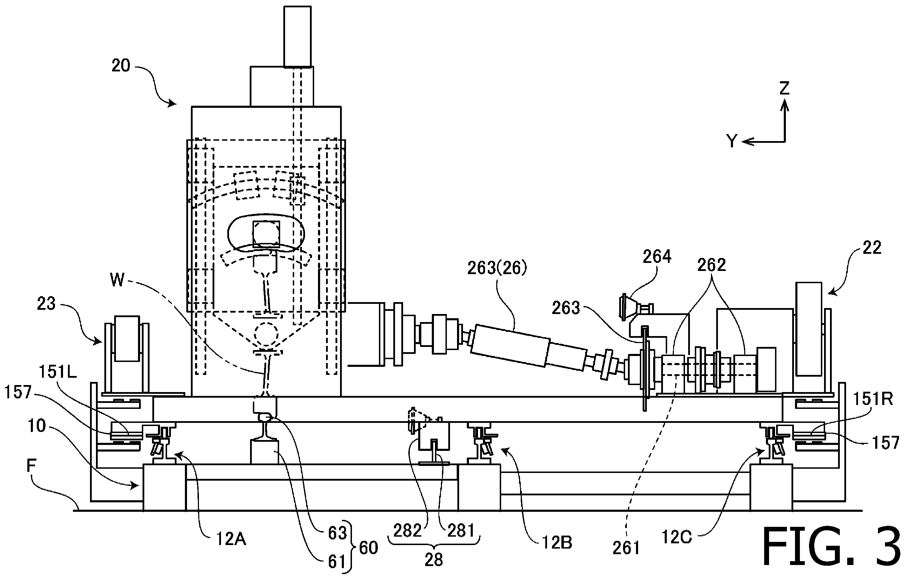

The first testing device 1 includes a guide part 10 and a track part 60 which are elongated in the X-axis direction, and a carriage 20 which can travel on the guide part 10 in the X-axis direction. As shown in FIG. 3, the track part 60 is mounted on a left portion of a base frame 11 (hereinafter, abbreviated as "base 11") of the guide part 10. A test rail 63 on which a test wheel W mounted to the carriage 20 rolls is provided on an upper surface of the track part 60. In the present embodiment, the track part 60 is removably attached to the base 11 of the guide part 10 so that the track part 60 can be changed in accordance with test conditions. The base 11 of the guide part 10 and the frame 61 of the track part 60 may be integrated by, for example, welding. The track part 60 may also be installed directly on a foundation F (FIG. 3) to completely separate the track part 60 from the guide part 10.

As shown in FIG. 5, a pair of wheel stoppers 13 are provided at a front end portion of the guide part 10 adjacent to the drive parts 14LB and 14RB which will be described later. The wheel stoppers 13 are devices for forcibly stopping the carriage 20 by colliding with the carriage 20 when the carriage 20 overruns. Each wheel stopper 13 includes a pair of hydraulic shock absorbers that mitigate an impact generated at the time of collision with the carriage 20.

As shown in FIG. 3, the test wheel W is attached to the carriage 20. During the test, the carriage 20 travels while the test wheel W is made to contact the test rail 63, and the test wheel W rolls on the test rail 63.

As shown in FIGS. 3 and 5, the guide part 10 includes a plurality of (in the illustrated embodiment, three) guide mechanisms 12A, 12B, and 12C that guides movement of the carriage 20 in the X-axis direction. The guide mechanisms 12A, 12B, and 12C are provided at a left end portion, a center portion in a width direction (i.e., in the Y-axis direction), and a right end portion of the guide part 10, respectively.

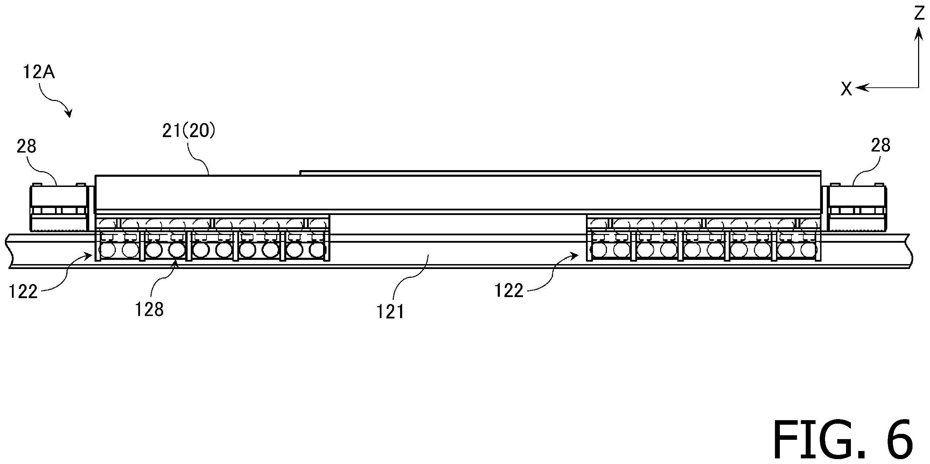

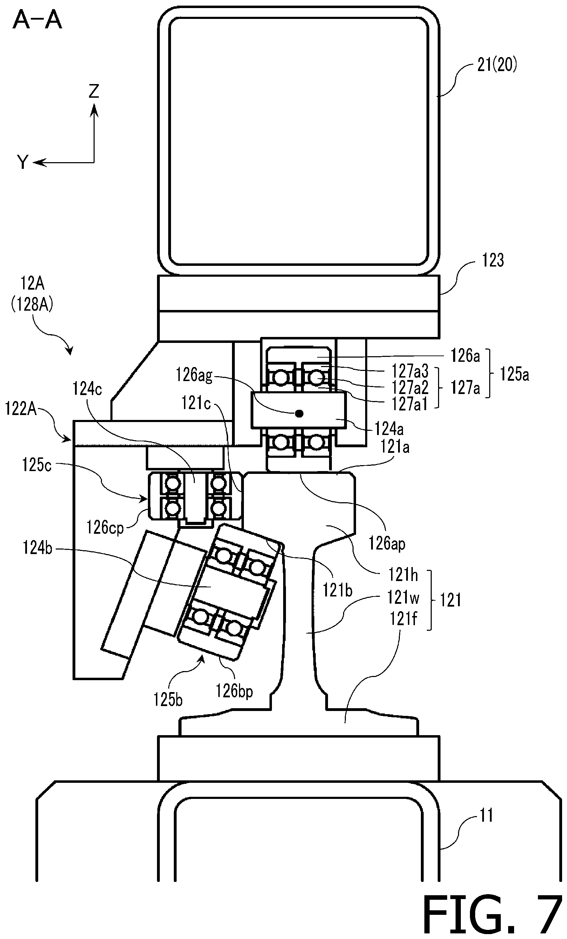

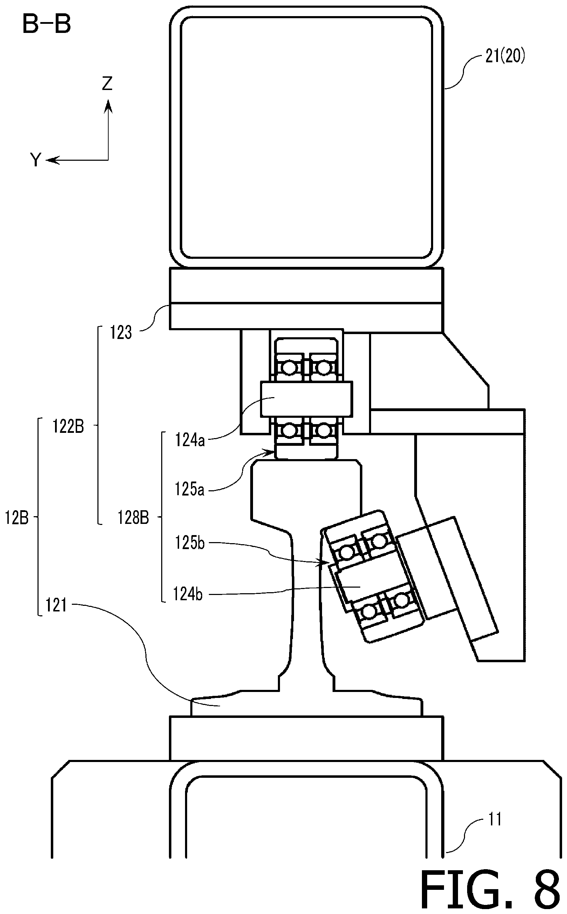

FIG. 6 is a left side view of the guide mechanism 12A. FIGS. 7 and 8 are cross-sectional views of the guide mechanisms 12A and 12B, respectively. Since the guide mechanism 12C is configured to be bilaterally symmetric with the guide mechanism 12A, a detailed description of the guide mechanism 12C is omitted.

Each of the guide mechanisms 12A, 12B, and 12C includes one rail 121 forming a track extending in the X-axis direction, and one or more (in the illustrated embodiment, two) traveling parts 122A (FIG. 7), 122B (FIG. 8), or 122C (not shown; configured to be bilaterally symmetric with the traveling part 122A of the guide mechanism 12A) capable of traveling on the rail 121. As shown in FIG. 6 for the traveling part 122A, one of the two traveling parts 122A, 122B, or 122C is attached to a front end portion of a bottom surface of the carriage 20, and the other is attached to a rear end portion of the bottom surface of the carriage 20.

As shown in FIGS. 7 and 8, the rail 121 is laid on the base 11 of the guide part 10. Each of the traveling parts 122A, 122B, and 122C is attached to a lower surface of a main frame 21 of the carriage 20.

The rail 121 is a flat-bottomed rail having a head 121h, a bottom 121f wider than the head 121h, and a narrow body 121w that connects the head 121h and the bottom 121f. The rail 121 of the present embodiment is, for example, a heat-treated rail conforming to Japanese Industrial Standard JIS E 1120:2007 (e.g., heat-treated rail 50N-HH340) to which additional processing is applied. The heat-treated rail is a railroad rail of which wear resistance is improved by applying heat treatment to the head.

As shown in FIG. 7, the traveling part 122A of the guide mechanism 12A includes a frame 123 long in the X-axis direction and attached to the lower surface of the main frame 21 of the carriage 20, and a plurality of roller units 128A attached to the frame 123. The roller unit 128A includes three rods 124a, 124b, and 124c attached to the frame 123, and three roller assemblies 125a, 125b, and 125c attached to the rods 124a, 124b, and 124c, respectively. The three roller assemblies 125a, 125b, and 125c of each roller unit 128A are disposed at the same position in the X-axis direction. As shown in FIG. 6, the plurality of roller units 128A are arranged at predetermined intervals in the X-axis direction.

Since the roller assemblies 125b and 125c have the same configuration as the roller assembly 125a (although the roller assembly 125c is different in size from the roller assembly 125a), the roller assembly 125a will be described on behalf of them, and a redundant description of the roller assemblies 125b and 125c are omitted.

As shown in FIG. 7, the roller assembly 125a includes a roller 126a that rolls on a rail 121, and a pair of bearings 127a that rotatably support the roller 126a. The bearings 127a are rolling bearings, and ball bearings are used in the illustrated embodiment.

In the present embodiment, an outer peripheral surface 126ap of the roller 126a is formed in a cylindrical shape, but may be a curved surface (e.g., a spherical surface having a center point 126ag of the roller 126a as the center) having a curvature in a rotation axis direction (i.e., in a longitudinal section including the rotation axis shown in FIG. 7).

The bearing 127a of the roller assembly 125a is, for example, a single-row radial bearing. The bearing 127a includes an inner ring 127a1 fitted to the rod 124a, an outer ring 127a3 fitted to an inner peripheral surface of the roller 126a, and balls 127a2 being a plurality of rolling bodies interposed between the inner ring 127a1 and the outer ring 127a3. The balls 127a2 roll on a circular track defined by a pair of annular grooves formed on an outer peripheral surface of the inner ring 127a1 and an inner peripheral surface of the outer ring 127a3, respectively.

The roller assembly 125a is disposed such that the outer peripheral surface 126ap contacts a head upper surface (top surface) 121a of the rail 121 and rolls on the head upper surface 121a as the carriage 20 travels. The roller assembly 125b is disposed such that an outer peripheral surface 126bp contacts one of head lower surfaces 121b of the rail 121 and rolls on the head lower surface 121b. The roller assembly 125c is disposed such that an outer peripheral surface 126cp contacts one of head side surfaces 121c of the rail 121 and rolls on the head side surface 121c.

In the rail 121, shapes of the head upper surface 121a, the head lower surface 121b, and the head side surface 121c which are in contact with the roller assemblies 125a, 125b, and 125c, respectively, are changed to flat surfaces, and additional processes (e.g., grinding, polishing, or the like) for improving surface accuracy such as flatness and parallelism are performed.

As described above, the guide mechanism 12A and the guide mechanism 12C, which are attached to the left and right end portions of the carriage 20, respectively, are configured to be bilaterally symmetric. That is, the guide mechanism 12C is obtained by disposing a guide mechanism identical to the guide mechanism 12A with the right and left sides reversed (i.e., by rotating 180 degrees about a vertical axis).

As shown in FIG. 8, the traveling part 122B of the guide mechanism 12B includes a frame 123 attached to the lower surface of the main frame 21 of the carriage 20, and a plurality of roller units 128B attached to the frame 123. The roller unit 128B includes the two rods 124a and 124b, and the two roller assemblies 125a and 125b. The rod 124b and the roller assembly 125b are disposed on the left side of the rail 121 in the traveling part 122A of the guide mechanism 12A, whereas the rod 124b and the roller assembly 125b are disposed on the right side of the rail 121 in the traveling part 122B of the guide mechanism 12B. That is, the traveling part 122B of the guide mechanism 12B is obtained by removing the roller assembly 125c and the rod 124c from the traveling part 122A of the guide mechanism 12A described above and disposing the traveling part 122A with the right and left sides reversed. It should be noted that the traveling part 122B of the guide mechanism 12B may include the roller assembly 125c and the rod 124c.

In the present embodiment, the roller assemblies 125b and 125c of the guide mechanism 12A disposed on the left side of the rail 121 prevent the carriage 20 from moving to the right (in the Y-axis negative direction) with respect to the rail 121. The roller assembly 125b of the guide mechanism 12B and the roller assemblies 125b and 125c of the guide mechanism 12C disposed on the right side of the rail 121 prevent the carriage 20 from moving to the left (in the Y-axis positive direction) with respect to the rail 121. Therefore, the carriage 20 is prevented from moving in the Y-axis direction with respect to the rail 121. The roller assemblies 125b of the guide mechanisms 12A, 12B, and 12C prevent the carriage 20 from moving up (in the Z-axis positive direction) with respect to the rail 121. By preventing the carriage 20 from moving in the Y-axis direction and the Z-axis positive direction with respect to the rail 121 in this manner, the carriage 20 is prevented from derailing from the rail 121.

In the present embodiment, the traveling part 122B (FIG. 8) is disposed with the right and left sides reversed with respect to the traveling part 122A (FIG. 7), but the traveling part 122B may be disposed in the same orientation in the left-right direction as the traveling part 122A. Similarly, the traveling part 122C and the traveling part 122A may be disposed in the same orientation in the left-right direction. However, any two of the traveling part 122A, the traveling part 122B, and the traveling part 122C are disposed with the right and left sides reversed with respect to each other (i.e., the roller assemblies 125b and 125c are disposed with the right and left sides reversed with respect to the rail 121).

In order to prevent the movement of the carriage 20 in the left-right direction (Y-axis direction), it is sufficient that at least two of the traveling parts 122A, 122B, and 122C that are disposed with the right and left sides reversed with respect to each other are provided with the roller assembly 125c and the rod 124.

In order to prevent movement of the carriage 20 upward (in the Z-axis positive direction), it is sufficient that at least one of the traveling parts 122A, 122B or 122C is provided with the roller assembly 125b and the rod 124b.

If an angle between the head lower surface 121b of the rail 121 and the horizontal plane is greater than a certain angle (e.g., 5 degrees), then the roller assembly 125b can be used in place of the roller assembly 125c.

The rail 121 of the guide mechanism 12 may be formed by connecting a plurality of short rail members.

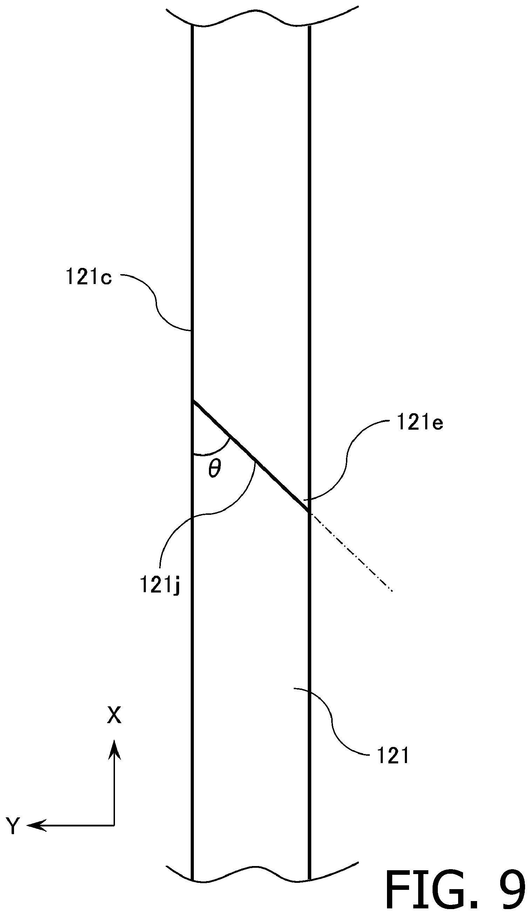

In this case, as shown in FIG. 9, a joint 121j of the rail 121 needs not be perpendicular to a longitudinal direction of the rail 121 (i.e., X-axis direction), but may be formed to be oblique in plan view (i.e., such that the joint 121j is inclined at a certain angle θ with respect to the ZX plane). By forming the joint 121j obliquely, even if the rail 121 is expanded or contracted due to a temperature change, strain of the rail 121 is released by the sliding of the rail members at the joint 121j and the rail 121 is prevented from bending.

In the case of forming the oblique joint 121j, the roller assemblies 125b and 121c (FIG. 9) are disposed on a side of the rail 121 where the head side surface 121c forms an obtuse angle with the joint 121j in front of the joint 121j (i.e., the left side in the guide mechanism 12A and the right side in the guide mechanisms 12B and 12C). By disposing the roller assemblies 125b and 125c in this manner, even if displacement occurs at the joint 121j of the rail 121, a large impact or damage by the roller assemblies 125b and 125c colliding with an acute end 121e of the joint 121j can be prevented.

At the joint 121j, end surfaces of the two rail members to be connected may be brought into contact with each other, or a predetermined gap may be provided between the end surfaces to make the rail members face against each other in a non-contact manner. In the present embodiment, the end surfaces of the two rail members to be connected are merely abutted and not joined at the joint 121j of the rail 121, but the rail members may be joined at the joint 121j by welding, brazing, or the like.

Instead of the guide mechanisms 12A, 12B, and 12C of the present embodiment, a guideway-type circulating linear bearing (so-called linear guide) may be used. A ball circulating linear bearing has an oval track in which adjacent ends of two parallel straight tracks are connected to each other by semi-circular tracks. When a linear bearing having such straight tracks is driven at a high speed (e.g., at a speed of 10km/h or more), since centrifugal force suddenly occurs on each rolling body (i.e., an impact load acts on each rolling body and a rolling surface of each curved track) when each rolling body moves from the straight track to each curved track, the rolling bodies and the rolling surfaces are rapidly worn or damaged. Therefore, there is a problem that, when the carriage 20 is made to travel at a high speed, life of the linear bearing shortens or the linear bearing is damaged.

In the bearings 127a to 127c used in the guide mechanisms 12A, 12B, and 12C of the present embodiment, since the rolling bodies always travel on a circular track having a constant curvature, a rapid fluctuation of the centrifugal force acting on each rolling body (i.e., an impact load) does not occur. Therefore, even if the rollers 126a to 126c are rotated at a high peripheral speed exceeding, for example, 60km/h, life of the bearings 127a to 127c is not significantly reduced or the bearings 127a to 127c are not damaged. Therefore, by configuring the guide mechanisms 12A to 12C using a rolling bearing having a circular track whose curvature of the track for the rolling bodies is constant, the carriage 20 can travel at a high speed (e.g., at a speed of 10km/h or more). In the first testing device 1 of the present embodiment, by adopting the guide mechanisms 12A, 12B, and 12C described above, the carriage 20 can travel at a speed exceeding 85km/h.

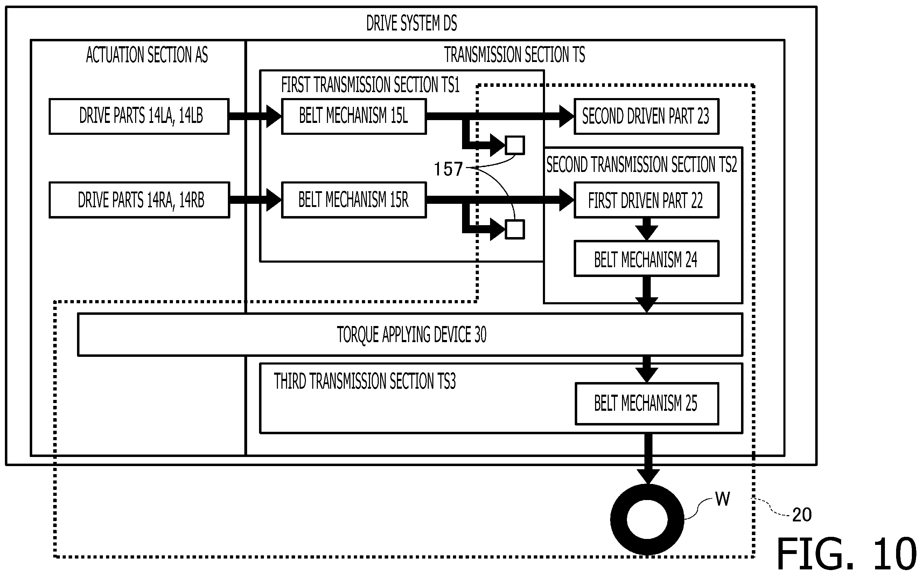

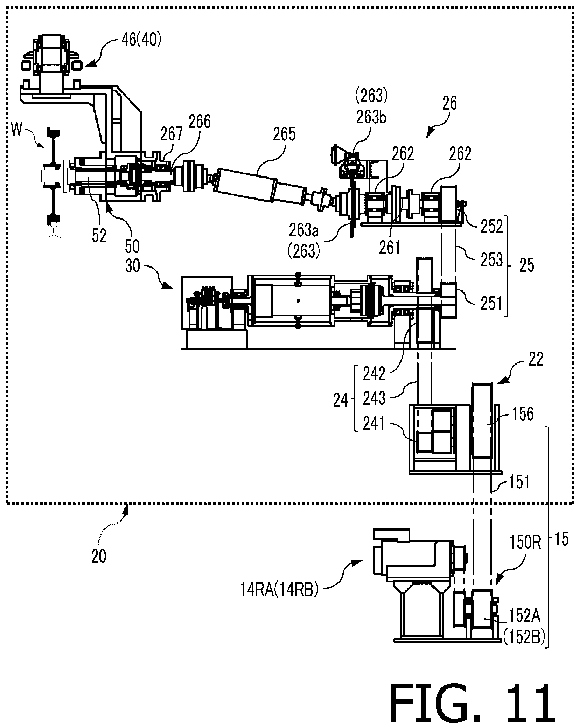

The first testing device 1 includes a drive system DS that drives the carriage 20 and the test wheel W. FIG. 10 is a block diagram showing a schematic logical configuration of the drive system DS. FIG. 11 is a diagram showing a schematic mechanical configuration of a main section of the drive system DS. In FIG. 10, arrows indicate transmission paths of mechanical power (hereinafter, simply referred to as "power").

As shown in FIG. 10, the drive system DS includes an actuating section AS that generates power, and a transmission section TS that transmits the power generated by the actuating section AS to the carriage 20 and the test wheel W to be driven. The drive system DS constitutes a power circulation system together with the test wheel W and the track part 60.

The actuating section AS includes two pairs of drive parts 14 (first driving means) on the left and the right and attached to the guide part 10, and a torque generator 30 (second driving means) attached to the carriage 20. The drive parts 14 are mainly used to control the traveling speed of the carriage 20 and the rotation speed of the test wheel W, and the torque generator 30 is mainly used to control torque to be applied to the test wheel W.

The transmission section TS includes a first transmission section TS 1 that transmits the power generated by the drive part 14 to the carriage 20, a second transmission section TS2 that extracts a portion of the power transmitted by the first transmission section TS1 and transmits the extracted power to the torque generator 30, and a third transmission section TS3 that transmits the power output by the torque generator 30 to the test wheel W. The torque generator 30 also constitutes a portion of the transmission section TS.

As shown in FIGS. 4 and 5, the two pairs of drive parts 14 (a pair of drive parts 14LA and 14LB on the left side and a pair of drive parts 14RA and 14RB on the right side) are installed in the vicinity of four corners on the base 11 of the guide part 10. The drive parts 14LA and 14RA are disposed at a rear end portion of the guide part 10, and the drive parts 14LB and 14RB are disposed at a front end portion of the guide part 10.

As will be described later, the drive parts 14RA and 14RB on the right side function both as a carriage driving means that drives the carriage 20 to travel and as a test wheel driving means (rotation speed applying means) that rotationally drives the test wheel W at a rotation speed corresponding to the traveling speed of the carriage 20. The drive parts 14LA and 14LB on the left side have a function as the carriage driving means.

The first transmission section TS1 includes a pair of belt mechanisms 15 (15L, 15R) and a pair of driven parts (a first driven part 22 and a second driven part 23). The belt mechanism 15L on the left side is driven by the pair of drive parts 14LA and 14LB on the left side, and the belt mechanism 15R on the right side is driven by the pair of drive parts 14RA and 14RB on the right side. The first driven part 22 and the second driven part 23 are attached to the main frame 21 of the carriage 20. The first driven part 22 is connected to the belt mechanism 15R on the right side, and the second driven part 23 is connected to the belt mechanism 15L on the left side.

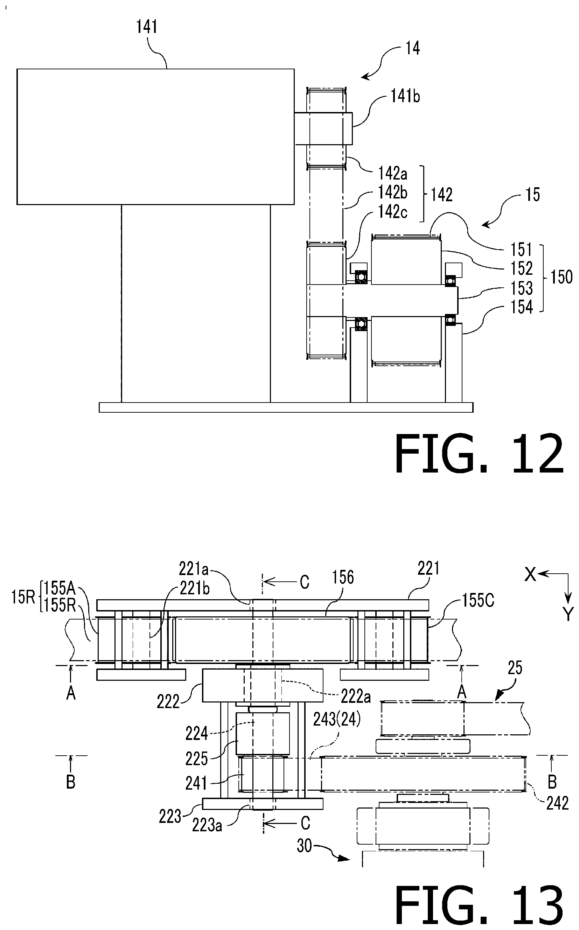

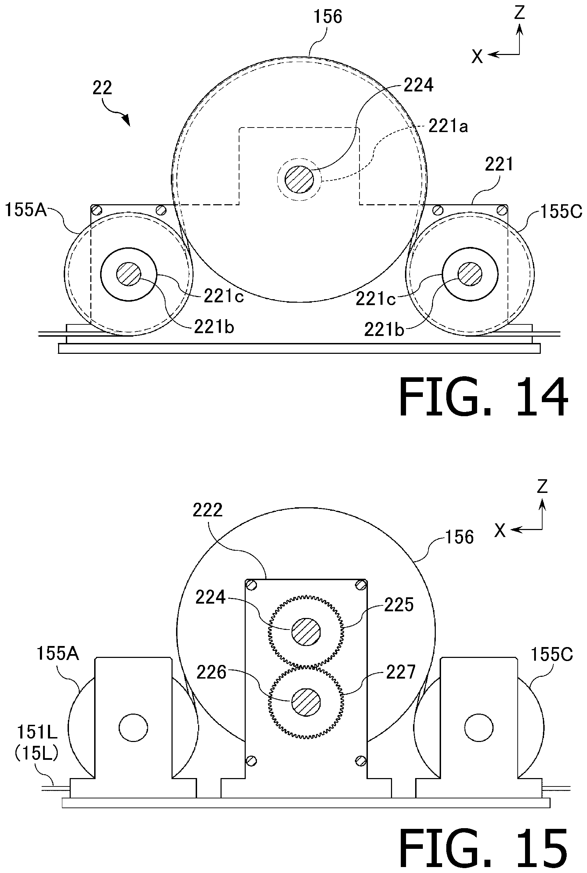

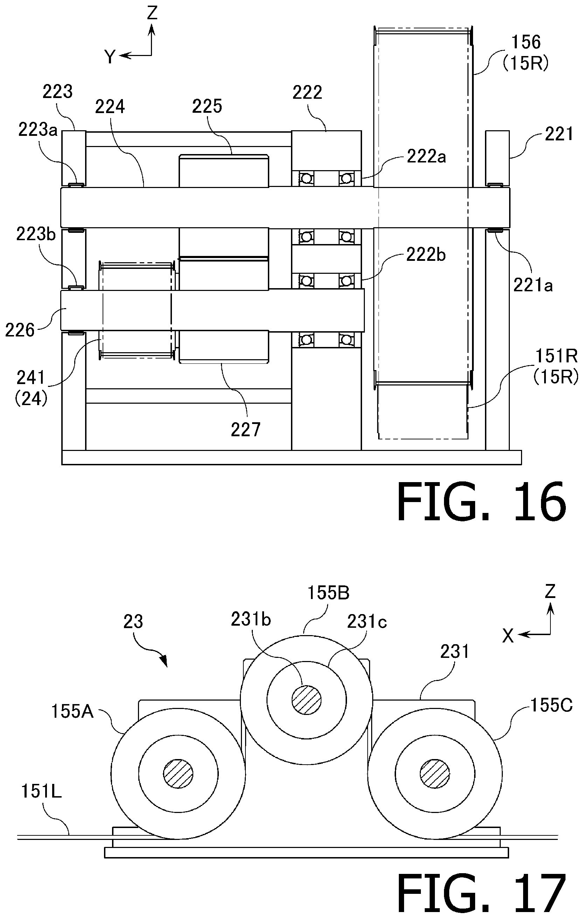

FIG. 12 is a diagram showing a schematic structure of the drive part 14 and a drive pulley part 150 of the belt mechanism 15. FIG. 13 is a plan view of the first driven part 22. FIGS. 14, 15, and 16 are a cross-sectional view taken along line A-A, a cross-sectional view taken along line B-B, and a cross-sectional view taken along line C-C of FIG. 13, respectively. FIG. 17 is a cross-sectional view showing a schematic structure of the second driven part 23.

Each of the belt mechanisms 15 (15L, 15R) includes a pair of drive pulley parts 150, belts 151 (151L, 151R), three driven pulleys 155A, 155C, and 156 held by the first driven part 22 (FIG. 14) or three driven pulleys 155A, 155B, and 155C held by the second driven part 23 (FIG. 17), and a pair of belt clamps 157 (FIGS. 3 and 5) that fix opposite ends of the belt 151 to the main frame 21 of the carriage 20. The drive pulley part 150 is installed on the base 11 of the guide part 10 and connected to the corresponding drive part 14.

The belt 151R is wound around the drive pulleys (152A, 152B) of the pair of drive pulley parts 150 and the three driven pulleys 155A, 156, and 155C. The belt 151L is wound around the drive pulleys (152A, 152B) of the pair of drive pulley parts 150 and the three driven pulleys 155A, 155B, and 155C.

The drive part 14 includes a motor 141 (first motor) and a belt mechanism 142. The motor 141 is, for example, an ultra-low inertia, high output type AC servo motor whose inertia moment of a rotating part is 0.01 kg·m$^2$ or less (more preferably, 0.008 kg·m$^2$ or less) and a rated output of 3kW to 60kW (more practically, 7kW to 37kW). By using such ultra-low inertia, high output motor 141, the carriage 20 can be accelerated to a maximum speed (e.g., 240km) in a short travel distance (e.g., 20 to 50m).

The motor 141 may be a motor in which a rotating part has a standard inertia moment. The motor 141 may also be another type of electric motor of which speed can be controlled, such as a so-called inverter motor in which an inverter is used for drive control.

The belt mechanism 142 includes a drive pulley 142a attached to a shaft 141b of the motor 141, a driven pulley 142c, and a belt 142b wound around the drive pulley 142a and the driven pulley 142c. The belt 142b is, for example, a toothed belt having the same configuration as that of the belt 151 which will be described later. The type of the belt 142b may be different from that of the belt 151.

In the belt mechanism 142, since a pitch circle diameter of the driven pulley 142c is larger (i.e., the number of teeth is larger) than that of the drive pulley 142a, the speed reduction ratio is larger than 1. Therefore, rotation output from the motor 141 is decelerated by the belt mechanism 142. The speed reduction ratio of the belt mechanism 142 may be 1 or less. A speed reducer may be provided in the drive part 14 in place of (or in addition to) the belt mechanism 142. A shaft 153 of the belt mechanism 15, which will be described later, may be directly connected to the shaft 141b of the motor 141 without providing the belt mechanism 142 or the speed reducer.

The drive pulley part 150 of the belt mechanism 15 is disposed adj acent to the drive part 14. The drive pulley part 150 includes a pair of bearing parts 154, the shaft 153 rotatably supported by the pair of bearing parts 154, and a drive pulley 152 attached to the shaft 153. The driven pulley 142c of the belt mechanism 142 is attached to the shaft 153, and the output of the drive part 14 is transmitted via the shaft 153 and the drive pulley 152 to the belt 151 wound around the drive pulley 152.

The belt 151 is a toothed belt having core wires of steel wires. The belt 151 may be a belt having core wires formed of so-called super fibers such as carbon fibers, aramid fibers, and ultra-high molecular weight polyethylene fibers. By using lightweight and high-strength core wires such as carbon core wires, it becomes possible to drive the carriage 20 at a high acceleration using a motor having a relatively low output (or to apply a high driving/braking force to the test wheel W), and it becomes possible to reduce a size of the first testing device 1. When a motor having the same output is used, it is possible to improve performance (specifically, improve acceleration performance) of the first testing device 1 by using the lightweight belt 151 having core wires formed of so-called super fibers.

As shown in FIGS. 3 to 5, both ends of each belt 151 are fixed to the main frame 21 of the carriage 20, respectively. Thus, each belt 151 forms a loop via the carriage 20. When each belt mechanism 15 is operated, the carriage 20 is pulled by each belt 151 and travels in the X-axis direction.

In the present embodiment, the belt 151 is fixed to the carriage 20 with the belt clamps 157 at a lower side of the loop, and the belt mechanism 15 and the first driven part 22 or the second driven part 23 are connected to each other at an upper side of the loop. By disposing the belt clamp 157 having a relatively low height below the first driven part 22 or the second driven part 23, a height of the belt mechanism 15 can be reduced. It should be noted that the belt 151 may be fixed to the carriage 20 at the upper side of the loop.

As shown in FIG. 4, the pair of drive pulleys 152 (152A, 152B) of the belt mechanism 15 are fixed pulleys that are disposed with an area in which the carriage 20 can travel interposed therebetween and are held on the base 11 i.e., a position of the center of gravity is fixed with respect to the base 11). The driven pulleys 155 (155A, 155B, 155C) and 156 held by the first driven part 22 or the second driven part 23 are movable pulleys that are movable in the X-axis direction together with the carriage 20.

In the following description, for configurations in which a pair is provided both on the left and right sides, the configuration on the left side will be generally described, and for the configuration on the right side, reference numerals are enclosed in square brackets, and redundant descriptions are omitted.

In the present embodiment, the pair of drive parts 14LA and 14LB [14RA and 14RB] are driven in the same phase. The drive parts 14LA and 14LB on the left side and the drive parts 14RA and 14RB on the right side are disposed with the right and left sides reversed and are driven in opposite phases.

Effective diameters (i.e., pitch circle diameters) or the numbers of teeth of the drive pulley 152 (FIG. 12) and the driven pulley 155 (FIGS. 14 and 17) are the same. A pitch circle diameter or the number of teeth of a driven pulley 156 (FIG. 14) held by the first driven part 22 is larger than (e.g., two times) those of the drive pulley 152 and the driven pulley 155.

As shown in FIG. 5, the carriage 20 includes the main frame 21, the first driven part 22, the second driven part 23, a belt mechanism 24, a belt mechanism 25, a transmission shaft part 26, a brake device 27, a brake device 28, the torque generator 30, an alignment part 40, and a spindle part 50 (axle part). As shown in FIG. 10, the first driven part 22 and the belt mechanism 24 constitute the second transmission section TS2. The belt mechanism 25, the transmission shaft part 26, and the spindle part 50 constitute the third transmission section TS3.

As shown in FIG. 11, the spindle part 50 includes a rotatably supported spindle 52. The spindle 52 is a shaft (i.e., an axle) to which the test wheel W is coaxially mounted (i.e., so as to share a center line) at one end thereof, and the test wheel W is rotationally driven together with the spindle 52 by the power output from the torque generator 30. The alignment part 40 is a mechanical section capable of adjusting alignment of the test wheel W (i.e., adjusting a position and an orientation of the test wheel W with respect to the test rail 63) by changing an orientation of the spindle part 50.

As shown in FIGS. 13 to 16, the first driven part 22 includes a main body 221, a bearing part 222, a bearing part 223, a shaft 224, a drive gear 225, a shaft 226, and a driven gear 227.

As shown in FIG. 14, the main body 221 includes two rods 221b extending in the Y-axis direction, and a pair of bearings 221c whose inner rings are fitted to the rods 221b. The driven pulleys 155A and 155C of the belt mechanism 15R are fitted to outer rings of the bearings 221c, respectively. With this configuration, the driven pulleys 155A and 155C of the belt mechanism 15R are rotatably supported by the main body 221.

As shown in FIG. 16, the main body 221 includes a bearing 221a. The bearing part 222 includes a pair of bearings 222a and 222b arranged vertically. The bearing part 223 includes a pair of bearings 223a and 223b arranged vertically.

The shaft 224 is rotatably supported at one end in the longitudinal direction by the bearing 221a, at the other end by the bearing 223a, and at an intermediate portion by the bearing 222a. The driven pulley 156 and the drive gear 225 of the belt mechanism 15R are attached to the shaft 224.

The shaft 226 is shorter than the shaft 224, and is rotatably supported at one end in the longitudinal direction by the bearing 222b and at the other end by the bearing 223b. The driven gear 227 that meshes with the drive gear 225 and a drive pulley 241 of the belt mechanism 24 are attached to the shaft 226.

That is, the driven pulley 156 (belt mechanism 15R) and the drive pulley 241 (belt mechanism 24) are connected via the first driven part 22. A portion of the power transmitted by the belt mechanism 15R is transmitted to the shaft 224 via the driven pulley 156, then to the shaft 226 via the drive gear 225 and the driven gear 227, and further to the belt mechanism 24 via the drive pulley 241. The power transmitted to the belt mechanism 24 is used to drive the test wheel W.

That is, the first driven part 22 on the right side and the driven pulley 156 (and the driven pulleys 155A and 155C) rotatably supported by the first driven part 22 have a function of extracting a portion of the power from the belt mechanism 15R and supplying the extracted power to the belt mechanism 24.

The remaining portion of the power transmitted by the belt mechanism 15R is transmitted to the main frame 21 of the carriage 20 to which the belt 151 is fixed by the belt clamps 157, and is used to drive the carriage 20.

That is, the belt mechanism 15R on the right side constitutes a portion of the means for driving the carriage 20 (carriage driving means), and also constitutes a portion of the means for driving the test wheel W (test wheel driving means). The belt mechanism 15R on the right side, together with the first driven part 22 on the right side, functions as means for distributing the power generated by the drive parts 14RA and 14RB to the power to be used to drive the carriage 20 and the power to be used to drive the test wheel W (power distribution means).

In the belt mechanism 15R of the present embodiment, since the pitch circle diameter of the driven pulley 156 on the output side is larger than that of the drive pulley 152 on the input side, the speed reduction ratio is larger than 1. It should be noted that the present invention is not limited to this configuration. The pitch circle diameter of the driven pulley 156 may be set to be equal to or larger than the pitch circle diameter of the drive pulley 152 to set the speed reduction ratio of the belt mechanism 15R to equal to or smaller than 1.

The first driven part includes the drive gear 225 and the driven gear 227, thereby reversing a rotational direction of the power.

As shown in FIG. 17, the second driven part 23 (main body 231) includes three rods 231b extending in the Y-axis direction, and three bearings 231c whose inner rings are fitted to the rods 231b, respectively. The three rods 231b are arranged at equal intervals in the X-axis direction. In the present embodiment, the rod 231b at the center is arranged at a position higher than the remaining two rods 231b, but all the rods 231b may be arranged at the same height.

The three driven pulleys 155 (the driven pulleys 155A, 155B, and 155C in order from the front) of the belt mechanism 15L are fitted to outer rings of the bearings 231c, respectively. With this configuration, the driven pulleys 155A, 155B, and 155C of the belt mechanism 15L are rotatably supported by the second driven part 23.

As shown in FIG. 4, the belt 151 of the belt mechanism 15 is folded back by the drive pulleys 152A and 152B to be divided into an upper portion 151a and a lower portion 151b. The upper portion 151a and the lower portion 151b are stretched in the traveling direction of the carriage 20 and are driven in directions opposite to each other. Specifically, the lower portion 151b of the belt 151 fixed to the carriage 20 is driven in the traveling direction of the carriage together with the carriage 20, and the upper portion 151a is driven in a direction opposite to the carriage 20 and the lower portion 151b. The driven pulleys 155 and 156 attached to the carriage 20 are wound around the upper portion 151a of the belt 151 traveling in the direction opposite to the carriage 20 and are driven by the upper portion 151a.

As shown in FIGS. 10 and 11, a portion of the power transmitted by the belt mechanism 15R on the right side is transmitted to the torque generator 30 by the second transmission section TS2, and is further transmitted to the test wheel W by the third transmission section TS3, and is used to drive the test wheel W. The second transmission section TS2 includes the first driven part 22 and the belt mechanism 24, and the third transmission section TS3 includes the belt mechanism 25, the transmission shaft part 26, and the spindle part 50. As described above, the remaining portion of the power transmitted by the belt mechanism 15R on the right side is transmitted to the main frame 21 of the carriage 20 to which end portions of the belt 151 is fixed by the belt clamp 157, and is used to drive the carriage 20. The belt mechanism 15R and the first driven part 22 configured as described above enable the belt 151 to drive both the carriage 20 and the test wheel W.

The second driven part 23 on the left side is different from the first driven part 22 on the right side in that the second driven part 23 on the left side is not provided with a configuration for extracting a portion of the power transmitted by the belt mechanism 15L and transmitting the extracted power to the second transmission section TS2 provided to the carriage 20 (specifically, the bearing parts 222 and 223, the shafts 224 and 226, the drive gear 225, and the driven gear 227). The second driven part 23 on the left side is not an essential component, but by providing the second driven part 23 on the left side, forces the carriage 20 receives from the right and left belt mechanisms 15L and 15R balance, and the traveling of the carriage 20 stabilizes.

As described above, in the present embodiment, a configuration in which the carriage 20 and the test wheel W are driven using the power transmitted by a common power transmission device (i.e., the belt mechanism 15R). With this configuration, it is possible to rotationally drive the test wheel W at a peripheral speed (rotation speed) corresponding to the traveling speed of the carriage 20 at all times regardless of the traveling speed of the carriage 20. Furthermore, in order to reduce operation amount (i.e., power consumption) of the torque generator 30, the present embodiment is configured such that the test wheel W is rotationally driven at a peripheral speed substantially equal to the traveling speed of the carriage 20 when the torque generator 30 is not in operation.

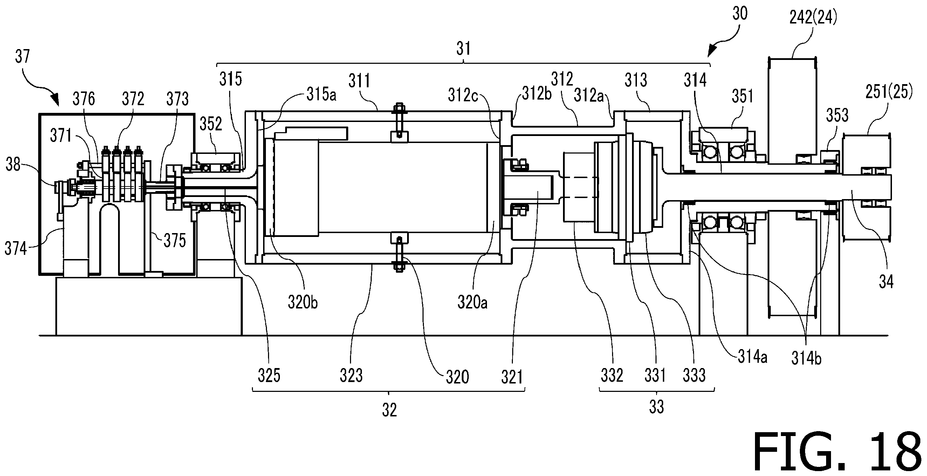

The belt mechanism 24 includes the drive pulley 241 attached to the shaft 226 (FIG. 16) of the first driven part 22 described above, a driven pulley 242 attached to a later-described shaft part 314 (FIG. 18) of the torque generator 30, and a belt 243 wound around the drive pulley 241 and the driven pulley 242. The belt 243 is, for example, a toothed belt having the same configuration as that of the belt 151 described above. The type of the belt 243 may be different from that of the belt 243.

FIG. 18 is a diagram showing a structure of the torque generator 30. The torque generator 30 generates torque to be applied to the test wheel W, and outputs the torque by adding the torque to the rotational motion transmitted by the belt mechanism 24. In other words, the torque generator 30 can apply torque to the test wheel W (i.e., apply a driving force or a braking force between the test rail 63 and the test wheel W) by changing a phase of the rotational motion transmitted by the belt mechanism 24.

The torque generator 30 functions as a second actuating means that generates power for driving the test wheel W, and also functions as a power coupling means that couples the power generated by the motor 141 (first motor) of the drive parts 14 (first actuating means) and a power generated by a later-described motor 32 (second motor) of the torque generator 30.

By incorporating the torque generator 30 into the drive system DS, it is possible to share the roles between the power sources (drive parts 14RA and 14RB) for controlling the rotation speed of the test wheel W and the power source (motor 32 which will be described later) for controlling the torque. Thus, it is possible to use a power source having a smaller capacity, and it is possible to control the rotation speed and torque to be applied to the test wheel W with higher accuracy. Furthermore, by incorporating the torque generator 30 into the carriage 20, since load applied to the belt mechanism 15R is reduced, it is possible to downsize the belt mechanism 15R (e.g., to reduce the number of toothed belts used) and to use a member having a lower load capacity.

The torque generator 30 includes a rotating frame 31, the motor 32 (second motor), a speed reducer 33, and a shaft 34 which are mounted inside the rotating frame 31, three bearing parts 351, 352, and 353 that rotatably support the rotating frame 31, a slip ring part 37, and a rotary encoder 38 that detects the rotation speed of the rotating frame 31.

In the present embodiment, the motor 32 is an ultra-low inertia high output type AC servo motor of which inertia moment of a rotating part is 0.01kg·m$^2$ or less (more preferably, 0.008kg·m$^2$ or less) and the rated output is 3kW to 60kW (more practically, 7kW to 37kW).

The rotating frame 31 has a first cylindrical part 311 (motor accommodating part), a second cylindrical part 312 (connecting tube), and a third cylindrical part 313 which are substantially cylindrical and have large diameters, and shaft parts 314 and 315, which are substantially cylindrical and have diameters smaller than the first cylindrical part 311. The shaft part 314 is coaxially coupled to one end portion (right end portion in FIG. 18) of the first cylindrical part 311 via the second cylindrical part 312 and a third cylindrical part 313. The shaft part 315 is coaxially coupled to the other end portion (left end portion in FIG. 18) of the first cylindrical part 311. The shaft part 314 is rotatably supported by the bearing parts 351 and 353, and the shaft part 315 is rotatably supported by bearing part 352.

The motor 32 is accommodated in a hollow portion of the first cylindrical part 311. In the motor 32, a shaft 321 is disposed coaxially with the rotating frame 31, and a motor case 320 (i.e., stator) is fixed to the first cylindrical part 311 with a plurality of stud bolts 323.

The speed reducer 33 is disposed inside hollow portions of the second cylindrical part 312 and the third cylindrical part 313. The shaft 321 of the motor 32 is connected to an input shaft 332 of the speed reducer 33, and the shaft 34 is connected to an output shaft 333 of the speed reducer 33.

A flange 312a projecting outward from an outer periphery is formed at one end portion (right end portion in FIG. 18) of the second cylindrical part 312. A flange 312b projecting outward from an outer periphery and an inner flange 312c projecting inward from an inner periphery are formed at the other end portion (left end portion in FIG. 18) of the second cylindrical part 312.

A flange 320a of the motor 32 is fixed to the inner flange 312c of the second cylindrical part 312. A gear case 331 of the speed reducer 33 is fixed to one end portion of the second cylindrical part 312 (i.e., at a root of the flange 312a). That is, the motor case 320 of the motor 32 and the gear case 331 of the speed reducer 33 are coupled with high rigidity via the second cylindrical part 312 which is a single short cylindrical member. As a result, almost no bending moment acts on the shaft 321 of the motor 32 and the input shaft 332 of the speed reducer 33, and smooth (i.e., low-friction) rotation of the shaft 321 and the input shaft 332 is ensured, and thus control accuracy of the torque to be applied to the test wheel W is improved.

A flange 315a having the same diameter as the first cylindrical part 311 is formed at a root of the shaft part 315, and one end of the first cylindrical part 311 is fixed to an outer peripheral portion of the flange 315a. A flange 320b of the motor 32 is fixed to the flange 315a of the first cylindrical part 311. Since the motor 32 is fixed to the rotating frame 31 at both end portions and a central portion in a longitudinal direction of the motor case 320, the motor 32 is supported with high rigidity.

A flange 314a having the same diameter as the third cylindrical part 313 is formed at a root of the shaft part 314, and one end of the third cylindrical part 313 is fixed to an outer peripheral portion of the flange 314a. The other end of the third cylindrical part 313 is fixed to an outer peripheral portion of the flange 312a of the second cylindrical part 312.

The shaft part 314 is rotatably supported by the bearing part 351 at a root side near the flange 314a and by the bearing part 353 at a distal end portion. The driven pulley 242 of the belt mechanism 24 is disposed between the bearing part 351 and the bearing part 353, and is coaxially attached to an outer periphery of the shaft part 314. The rotating part of the torque generator 30 is rotationally driven by the power transmitted by the belt mechanism 24. That is, the shaft part 314 (rotating frame 31) serves as an input shaft of the torque generator 30.

A pair of bearings 314b are provided on inner peripheries of both end portions of the shaft part 314 (i.e., portions supported by the bearing part 351 or the bearing part 353). The shaft 34 passes through a hollow portion of the shaft part 314, and is rotatably supported by the pair of bearings 314b. A distal end portion of the shaft 34 protrudes outward from a distal end of the shaft part 314. A drive pulley 251 of the belt mechanism 25 is coaxially attached to the distal end portion of the shaft 34 protruding from the shaft part 314, and the belt mechanism 25 is driven by power output from the shaft 34. That is, the shaft 34 serves as an output shaft of the torque generator 30.

Torque output from the motor 32 is amplified by the speed reducer 33 and transmitted to the shaft 34. Rotation output from the shaft 34 to the belt mechanism 25 is obtained by superimposing the torque generated by the motor 32 and the speed reducer 33 on the rotation of the rotating frame 31 driven by the belt mechanism 24. The torque generator 30 adds the torque generated by the torque generator 30 to rotational motion transmitted to the shaft part 315 of the rotating frame 31 which is the input shaft, and outputs the torque from the shaft 34 which is the output shaft.

A reduction ratio of the speed reducer 33 is set in the range of 45/1 to 120/1 (more preferably, in the range of 55/1 to 100/1). This makes it possible to measure a slip ratio S with an accuracy of 0.01% while applying a tangential force $f_T$ of a sufficient magnitude.

The slip ring part 37 includes a plurality of pairs of slip rings 371 and brushes 372, a support tube 373, a bearing part 374, a support column 375, and a support arm 376. The support tube 373 is coaxially coupled to the shaft part 315 of the rotating frame 31. A distal end portion of the support tube 373 is rotatably supported by the bearing part 374. The support arm 376 is disposed parallel to the support tube 373. One end of the support arm is fixed to the support column 375 disposed on the rotating frame 31 side, and the other end of the support arm is fixed to a frame of the bearing part 374.

The plurality of slip rings 371 are arranged at constant intervals in an axial direction, and are attached to an outer periphery of the support tube 373. The plurality of brushes 372 are disposed so as to face and contact outer peripheral surfaces of the corresponding slip rings 371, and are attached to the support arm 376.

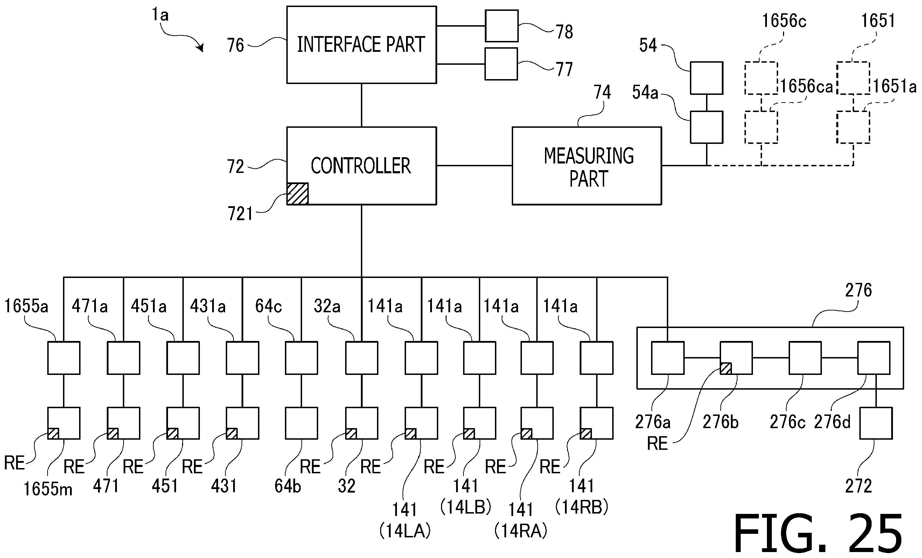

Lead wires (not shown) are connected to the slip rings 371, respectively. The lead wires pass through a hollow portion of the support tube 373 and are drawn out to a hollow portion of the shaft part 315 of the rotating frame 31. A cable 325 of the motor 32 passes through the hollow portion of the shaft part 315, and a plurality of wires included in the cable 325 are connected to the lead wires of the corresponding slip rings 371. The brushes 372 are connected to a driver 32a (FIG. 25). That is, the motor 32 and the driver 32a are connected via the slip ring part 37.

The rotary encoder 38 is attached to a bearing part 374 of the slip ring part 37. The support tube 373 that rotates integrally with the rotating frame 31 is connected to an input shaft of the rotary encoder 38.

As shown in FIG. 11, the belt mechanism 25 includes the drive pulley 251 attached to an output shaft (shaft 34) of the torque generator 30, a driven pulley 252 attached to an input shaft (transmission shaft 261) of the transmission shaft part 26, and a belt 253 wound around the drive pulley 251 and the driven pulley 252, and transmits the power output from the torque generator 30 to the transmission shaft part 26. The belt 253 is, for example, a toothed belt having the same configuration as the belt 151 described above. The type of the belt 253 may be different from that of the belt 151.

The transmission shaft part 26 includes a transmission shaft 261, a pair of bearings 262 that rotatably support the transmission shaft 261, a disk brake 263, a slide type constant velocity joint 265, a transmission shaft 266, and a bearing 267 that rotatably support the transmission shaft 266 The disk brake 263 includes a disk rotor 263a attached to the transmission shaft 261, and a caliper 263b that applies friction to the disk rotor 263a to perform braking.

The driven pulley 252 of the belt mechanism 25 is attached to one end portion of the transmission shaft 261, and one end of the slide type constant velocity joint 265 is connected to the other end portion of the transmission shaft 261 via the disk rotor 263a. The other end of the slide type constant velocity joint 265 is connected to a spindle 52 via the transmission shaft 266. The slide type constant velocity joint 265 is configured to be capable of smoothly transmitting rotation without rotational fluctuation regardless of an operating angle (i.e., an angle formed by an input shaft and an output shaft). A length (transmission distance) of the slide type constant velocity joint 265 in an axial direction is also variable.

The spindle 52 to which the test wheel W is to be attached is supported by the alignment part 40 such that an angle and a position of the spindle 52 can be changed. By connecting the transmission shaft 261 and the spindle 52 via the slide type constant velocity joint 265, even if the angle and the position of the spindle 52 change, the slide type constant velocity joint 265 can flexibly follow the change. Therefore, large strain is not applied to the spindle 52 and the transmission shaft 261, and power is smoothly transmitted.

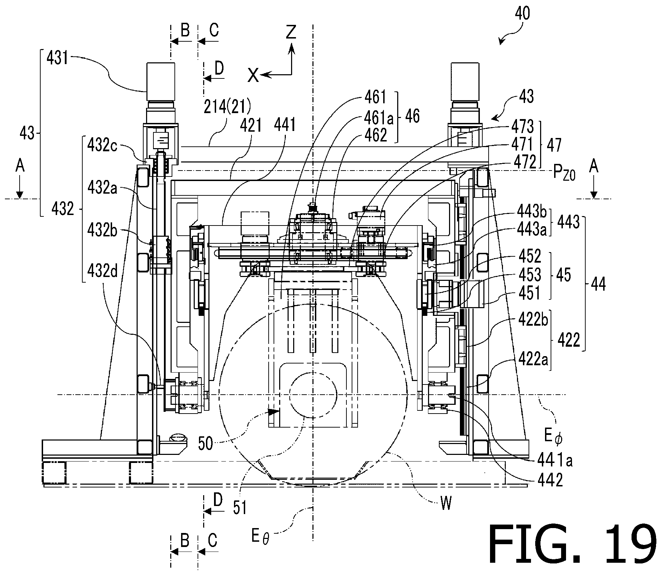

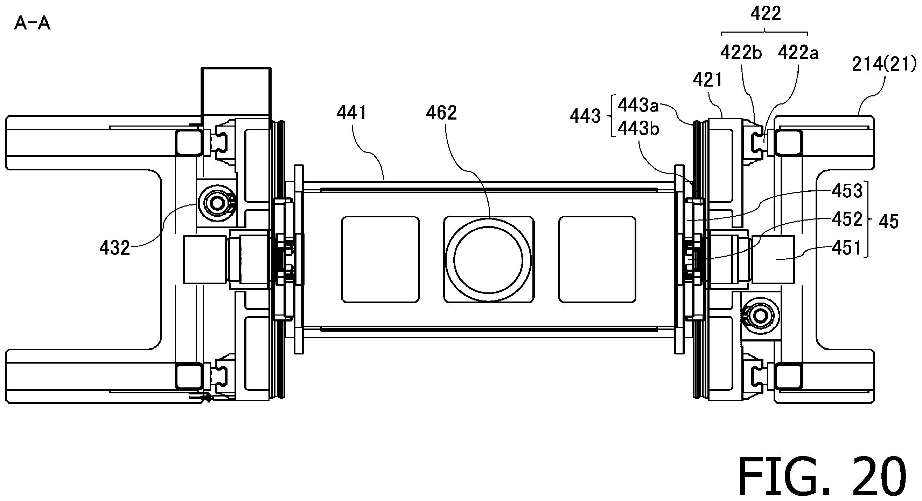

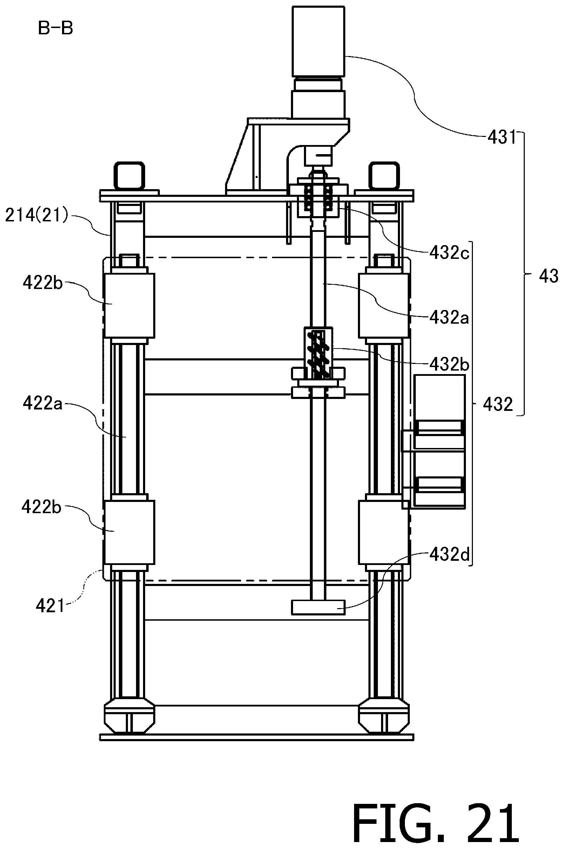

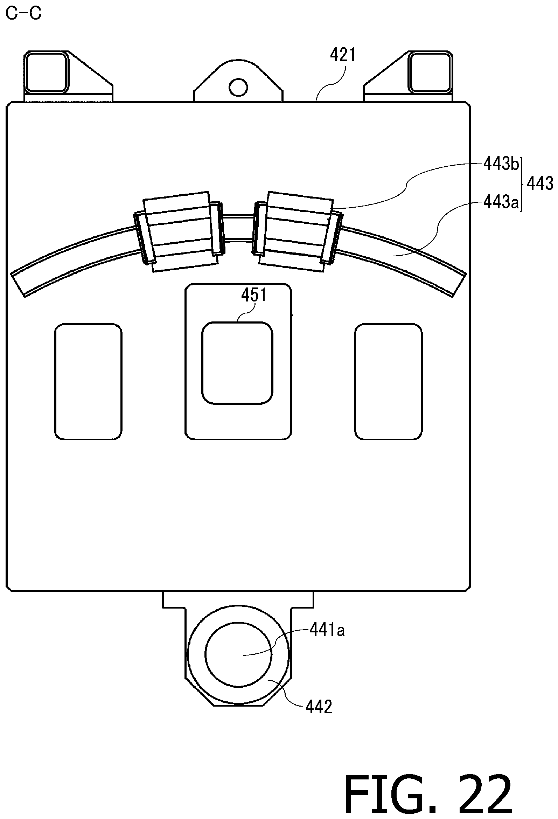

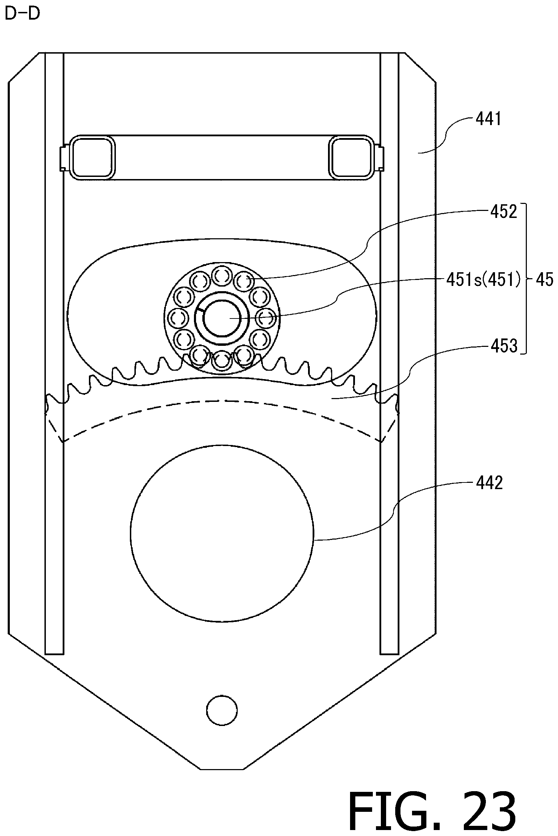

FIG. 19 is a diagram showing a schematic structure of the alignment part 40. FIGS. 20, 21, 22, and 23 are arrow views A-A, B-B, C-C, and D-D of FIG. 19, respectively.

The alignment part 40 includes a wheel load adjusting part 42, a camber adjusting part 44, and a slip angle adjusting part 46.

The wheel load adjusting part 42 is a mechanism for adjusting wheel load acting on the test wheel W (vertical load the test wheel receives from the test rail 63) by changing height of the spindle 52 and the test wheel W mounted to the spindle 52 (more specifically, a distance from a rail top surface 63a to a center C of the test wheel W). The wheel load adjusting part 42 is includes an elevating frame 421 (first movable frame) capable of moving vertically (in the Z-axis direction) with respect to the base 11, a plurality of (in the illustrated embodiment, two pairs of) linear guides 422 that guide the vertical movement of the elevating frame 421, and one or more (in the illustrated embodiment one pair of) Z-axis drive units 43 that drive the elevating frame 421 vertically.

On the left side of the main frame 21 of the carriage 20, an alignment mechanism support part 214 having a shed shape (or an arbor shape) and accommodates the alignment part 40 is provided. The elevating frame 421 is accommodated in the alignment mechanism support part 214. Each linear guide 422 includes a vertically extending rail 422a, and one or more (in the illustrated embodiment, two) traveling parts 422b capable of traveling on the rail 422a. One of the rail 422a and the traveling parts 422b of each linear guide 422 is attached to the alignment mechanism support part 214, and the other is attached to the elevating frame 421.

The Z-axis drive unit 43 (first drive unit) includes a motor 431, and a ball screw 432 (motion converter) that converts rotational motion of the motor 431 into linear motion in the Z-axis direction. The ball screw 432 includes a screw shaft 432a connected to a shaft of the motor 431, a nut 432b meshed with the screw shaft 432a, and bearings 432c and 432d that rotatably support the screw shaft 432a. The motor 431 and the two bearings 432c and 432d are attached to the alignment mechanism support part 214, and the nut 432b is attached to the elevating frame 421.

When the ball screw 432 is driven by the motor 431, the elevating frame 421 moves vertically together with the nut 432b. Accordingly, the test wheel W is lifted or lowered via the camber adjusting part 44, the slip angle adjusting part 46, and the spindle part 50 supported by the elevating frame 421, and load corresponding to a driving amount of the ball screw 432 (i.e., the height of the test wheel W) acts on the test wheel W.

In the present embodiment, the screw shaft 432a is directly connected to the motor 431. However, the motor 431 and the screw shaft 432a may be connected via a speed reducer, or a gear device that reduces rotation such as a worm gear.

In the present embodiment, the lead screw mechanism is used as the motion converter. However, another type of motion converter capable of converting rotational motion into linear motion may be used.

The motor 431 of the present embodiment is a servo motor. However, another type of motor of which operation amount can be controlled may be used as the motor 431.

The camber adjusting part 44 is a mechanism for adjusting a camber angle, which is an inclination of the test wheel W with respect to a road surface, by rotating the spindle 52 about the $E_\varphi$-axis (an axis extending in a front-rear direction through the center C of the test wheel W). The camber adjusting part 44 includes a $\varphi$ rotating frame 441 (second movable frame) that is rotatable about an $E_\varphi$-axis, a pair of bearings 442 that rotatably support the $\varphi$ rotating frame 441, a pair of curved guides 443 that guide the rotation of the $\varphi$ rotating frame 441, and a pair of $\varphi$ drive units 45 (second drive units) on the left and right sides and that rotationally drive the $\varphi$ rotating frame 441.

As shown in FIG. 19, the $\varphi$ rotating frame 441 and the elevating frame 421 of the present embodiment have gate-like shapes (inverse U-shapes) when viewed in the Y-axis direction. The $\varphi$ rotating frame 441 is accommodated in a hollow portion of the inverse U-shaped elevating frame 421. Cylindrical pivots 441a projecting outward coaxially with the $E_\varphi$-axis (i.e., in a direction away from the test wheel W) are provided on a front surface and a back surface of the $\varphi$ rotating frame 441. The pivots 441a are respectively rotatably supported by the pair of bearings 442 attached to the elevating frame 421. The $\varphi$ rotating frame 441 is supported rotatably about the $E_\varphi$-axis with the pivots 441a as support shafts. The bearings 442 may be attached to the $\varphi$ rotating frame 441, and the pivots 441a may be attached to the elevating frame 421. The shapes of the $\varphi$ rotating frame 441 and the elevating frame 421 are not limited to the shapes of the present embodiment, and may be any shapes having a hollow portion capable of accommodating the spindle part 50 and the like.

The curved guide 443 includes an arcuate curved rail 443a disposed concentrically with the $E_\varphi$-axis, and one or more (in the illustrated embodiment, two) traveling parts 443b capable of traveling on the curved rail 443a. One of the curved rail 443a and the traveling parts 443b is attached to the elevating frame 421, and the other is attached to the φ rotating frame 441.

The φ drive unit 45 includes a pair of spur gears 453 attached to the front and rear surfaces of the φ rotating frame 441, respectively, a pair of pinions 452 meshed with the respective spur gears 453, and a pair of motors 451 that drive the respective pinions 452. The spur gears 453 may be attached to the elevating frame 421, and the motors 451 may be attached to the φ rotating frame 441. The spur gear 453 is a segment gear formed in an arc shape centered on the $E_\varphi$-axis (i.e., coaxial with the $E_\varphi$-axis). The spur gears 453 are internal gears in the illustrated embodiment, but may be external gears.

The motors 451 are attached to the elevating frame 421, and the pinions 452 are coupled to shafts 451s of the motor 451, respectively. The motor 451 of the present embodiment is a servo motor, but another type of motor of which operation amount can be controlled may be used as the motor 451.

When the pinions 452 are rotationally driven by the motors 451, the φ rotating frame 441, together with the spur gears 453 meshed with the pinions 452, rotates about the $E_\varphi$ axis with respect to the elevating frame 421. Accordingly, the test wheel W supported by the φ rotating frame 441 via the slip angle adjusting part 46 and the spindle part 50 rotates about the $E_\varphi$-axis, and the camber angle changes.

The slip angle adjusting part 46 is a mechanism for adjusting a slip angle, which is an inclination of the test wheel W (more specifically, a wheel center plane perpendicular to the axle) with respect to the traveling direction (X-axis direction) of the carriage 20, by changing an orientation of the spindle 52 about an Ee-axis (an axis extending vertically through the center C of the test wheel W). As shown in FIG. 19, the slip angle adjusting part 46 includes a θ rotating frame 461 (third movable frame) rotatable about the $E_\theta$-axis, a bearing 462 that rotatably supports the θ rotating frame 461, and a θ drive unit 47 that rotationally drives the θ rotating frame 461.

The θ rotating frame 461 is accommodated in a hollow portion of the φ rotating frame 441 having a gate-like shape (inverse U-shape) when viewed in the Y-axis direction. A pivot 461a projecting coaxially with the $E_\theta$-axis is provided on an upper surface of the θ rotating frame 461. The pivot 461a is rotatably supported by the bearing 462 attached to a top plate of the φ rotating frame 441. The θ rotating frame 461 is supported so as to be rotatable about the $E_\theta$-axis with the pivot 461a as a support shaft.

The θ drive unit 47 includes a spur gear 473 attached to the θ rotating frame 461, one or more (in the illustrated embodiment, a pair of) pinions 452 that mesh with the spur gear 473, and one or more (in the illustrated embodiment, a pair of) motors 471 that rotationally drive the pinions 452, respectively. The spur gear 473 is coaxially coupled to the pivot 461a. The motors 471 are attached to the φ rotating frame 441, and the pinions 452 are attached to shafts of the motors 471.

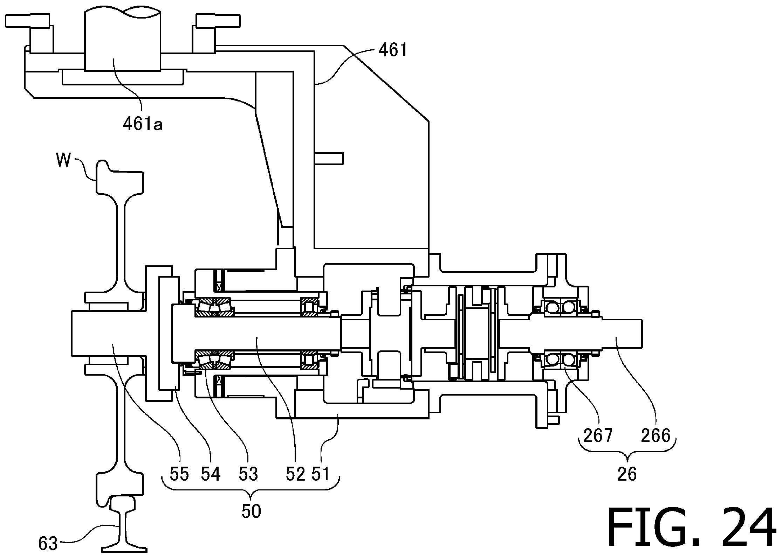

FIG. 24 is a diagram showing a schematic structure of the spindle part 50 (wheel support part). The spindle part 50 is attached to a lower end portion of the θ rotating frame 461. The spindle part 50 includes a frame 51 fixed to the θ rotating frame 461, a plurality of (in the illustrated embodiment, a pair of) bearings 53 attached to the frame 51, a spindle 52 rotatably supported by the bearing 53, a six component force sensor 54 that detects force acting on the test wheel W, and an axle 55 coaxially attached to a distal end portion of the spindle 52 via the six component force sensor 54. The six component force sensor 54 includes a plurality of piezoelectric elements (not shown). The test wheel W (FIG. 1) is attached to the axle 55.

The transmission shaft 266 of the transmission shaft part 26 is connected to an end of the spindle 52, and the transmission shaft 266 is rotatably supported by the bearing 267 attached to the frame 51 of the spindle part 50.

The alignment part 40 is configured such that the three axes, namely the Ee-axis, the $E_\varphi$-axis, and an $E_\lambda$-axis intersect at the center C of the test wheel W so that the position of the test wheel W does not move even if the camber angle (φ angle) or the slip angle (θ angle) is changed.

FIG. 25 is a block diagram showing a schematic configuration of a control system 1a of the first testing device 1. The control system 1a includes a controller 72 that controls operations of the entire device, a measurement part 74 that performs various measurements, and an interface part 76 that performs input and output to and from outside.

The motors 141 of respective drive parts 14, the motor 32 of the torque generator 30, the motor 431 of the wheel load adjusting part 42, the motors 451 of the camber adjusting part, the motors 471 of the slip angle adjusting part 46, and a motor 1655m of a moving unit 1655 are connected to the controller 72 via drivers 141a, 32a, 431a, 451a, 471a, and 1655a, respectively. A temperature adjusting device 64c is connected to the controller 72.

The controller 72 and each of the drivers 141a, 32a, 431a, 451a, and 471a are communicably connected to each other through an optical fiber, and high-speed feedback control can be performed between the controller 72 and each of the drivers. This enables synchronous control with higher accuracy (higher resolution and higher accuracy on the time axis).

The six component force sensor 54 of the spindle part 50, three component force sensors 1651 of a load detecting part 165, and proximity sensors 1656c of a sensor position detecting part 1656 are connected to the measurement part 74 via amplifiers 54a, 1651a, and 1656ca, respectively. Signals from the six component force sensor 54, the three component force sensors 1651, and the proximity sensors 1656c are amplified by the amplifiers 54a, 1651a, and 1656ca, respectively, and are then converted into digital signals in the measurement part 74, thereby generating measurement data. The measurement data is input to the controller 72. In FIG. 25, only one of the three component force sensors 1651, only one of the amplifiers 1651a, only one of the proximity sensors 1656c, and only one of the amplifiers 1656ca are shown.

Pieces of phase information detected by built-in rotary encoders RE of the motors 141, 32, 431, 451, 471, and 1655m are input to the controller 72 via the drivers 141a, 32a, 451a, 471a, and 1655a, respectively.

The interface part 76 includes, for example, one or more of a user interface for input by and output to a user, a network interface for connection to various types of networks such as a LAN (Local Area Network), and various types of communication interfaces such as a USB (Universal Serial Bus) and a GPIB (General Purpose Interface Bus) for connection to external devices. The user interface includes, for example, one or more of various types of operation switches, indicators, various types of display devices such as an LCD (Liquid Crystal Display), various types of pointing devices such as a mouse and a touch panel, and various types of input/output devices such as a touch screen, a video camera, a printer, a scanner, a buzzer, a speaker, a microphone and a memory card reader/writer.

The controller 72 is connected to a server 77 and an analyzing device 78 (e.g., a workstation, a PC, a cloud computing service, or the like) via, for example, the interface part 76 and a LAN. Data of test conditions and data of test results are stored in the server 77. An advanced analysis based on test results by the first testing device 1 and the second testing device 2 is performed by the analyzing device 78 (test data processing device).

The controller 72 synchronously controls driving of the motors 141 of the drive parts 14 based on speed setting data input through the interface part 76, thereby allowing the carriage 20 to travel at a predetermined speed. In the present embodiment, all of the four drive parts 14 are driven in the same phase (more precisely, the drive parts 14LA and 14LB on the left side and the drive parts 14RA and 14RB on the right side are driven in opposite phases [in opposite rotating directions]).

The controller 72 can apply a predetermined longitudinal force to the test wheel W by controlling driving of the motor 32 of the torque generator 30 based on longitudinal force (braking force or driving force) setting data to be applied to the test wheel W obtained through the interface part 76. The controller 72 can also apply a predetermined torque to the test wheel W by controlling the torque generator 30 based on torque setting data (or acceleration setting data) in place of the longitudinal force setting data.

The controller 72 can execute the control of the drive parts 14 for causing the carriage 20 to travel in a predetermined travelling speed (and, at the same time, causing the test wheel W to rotate in a peripheral speed that is substantially the same as the travelling speed) and the control of the torque generator 30 for applying the longitudinal force (or the torque) to the test wheel W synchronously based on a synchronizing signal.

Aside from basic waveforms such as sine wave, half sine wave, sawtooth wave, triangle wave and trapezoid wave, longitudinal force (or torque) waveforms that are measured in on-road tests, longitudinal force (or torque) waveforms that are obtained through simulated calculations, or other arbitrary synthesized waveforms (e.g., waveforms that are generated by a function generator or the like) can be used as waveforms of the torque to be generated by the torque generator 30.

Similarly, with regard to the control of the travelling speed of the carriage 20 (or the rotating speed of the test wheel W), aside from the basic waveforms, waveforms of rotating speeds of wheels that are measured in on-road tests, waveforms of change of speed that are obtained through simulated calculations, or other arbitrary synthesized waveforms (e.g., waveforms that are generated by a function generator or the like) can be used.

The first testing device 1 has a function of measuring a $\mu$-S characteristic between the test rail 63 and the test wheel W. The $\mu$-S characteristic is measured, for example, by continuously changing torque (or tangential force) acting on the test wheel W while causing the carriage 20 to travel at a predetermined speed, and continuously measuring changes in slip ratio S and friction coefficient $\mu$ during traveling.

The slip ratio S is calculated by the following formula.

$$S = (V_C - V_T)/V_T$$

where

Vc: peripheral speed of the test wheel (m/s)
$V_T$: traveling speed of the carriage (m/s)

The peripheral speed Vc of the test wheel W is calculated by the following formula.

$$V_C = R_W \times \Omega_{52} = R_W \times (\Omega_{31} + \Omega_{321}/r_{33})$$

where

$\Omega_{52}$: angular speed of the spindle 52 (rad/s)
$\Omega_{31}$: angular speed of the rotating frame 31 (rad/s)
$\Omega_{321}$: angular speed of the shaft 321 of the motor 32

(rad/s)

$r_{33}$: speed reduction ratio of the speed reducer 33

$R_W$: radius of the test wheel W (m)

The angular speed $\Omega_{31}$ of the rotating frame 31 of the torque generator 30 is detected by the rotary encoder 38 of the torque generator 30, and the angular speed $\Omega_{321}$ of the shaft 321 of the motor 32 of the torque generator 30 is detected by the rotary encoder RE of the motor 32.

A rotary encoder that detects the angular speed $\Omega_{52}$ of the spindle 52 may be provided to the third transmission section TS3 (e.g., the spindle part 50), and the peripheral speed Vc of the test wheel W may be calculated from the angular speed $\Omega_{52}$.

The traveling speed $V_T$ (m/s) of the carriage 20 is calculated by the following equation.

$$V_T = (PD_{152}/2) \times \Omega_{141b}$$

where

$\Omega_{141b}$: angular speed of the shaft 141b of the motor 141 (rad/s)

$PD_{152}$: pitch circle diameter of the drive pulley 152 (m)

The angular speed $\Omega_{141b}$ of the shaft 141b of the motor 141 of the drive part 14 is detected by the rotary encoder RE of the motor 141.

A speed sensor (e.g., a Doppler type or spatial filter type speed sensor) that detects the traveling speed $V_T$ of the carriage 20 may be provided, and the traveling speed $V_T$ may be directly detected by the speed sensor.

The friction coefficient $\mu$ is calculated by the following formula.

$$\mu = f_T/f_W$$

where

$f_T$: tangential force (N)

$f_W$: wheel load (N)

The tangential force fr (also referred to as a traction force, a longitudinal force, or a longitudinal creep force) which is a force in the traveling direction (X-axis direction) that acts on the test wheel W and the wheel load fw which is a force in the vertical direction (Z-axis direction) are detected by the six component force sensor 54 of the spindle part 50.

Next, the rail wheel type second testing device 2 will be described.

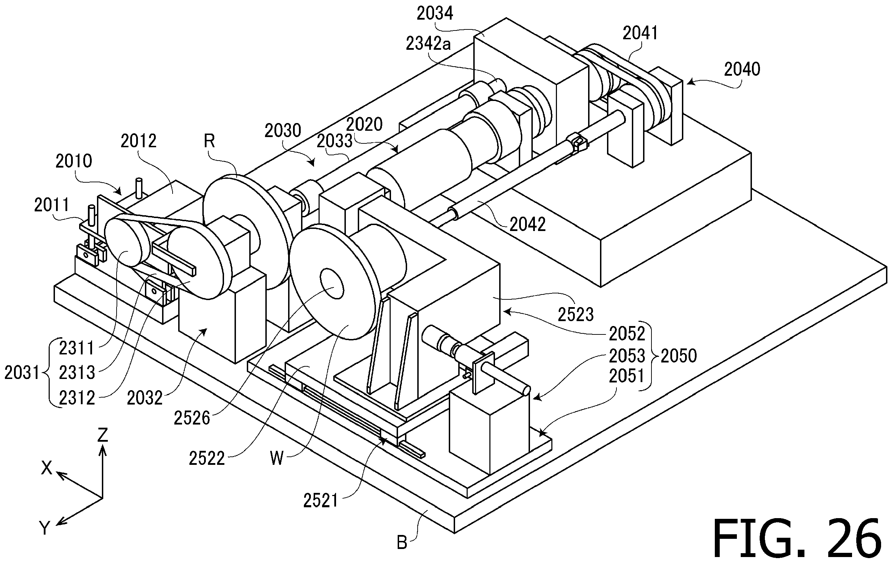

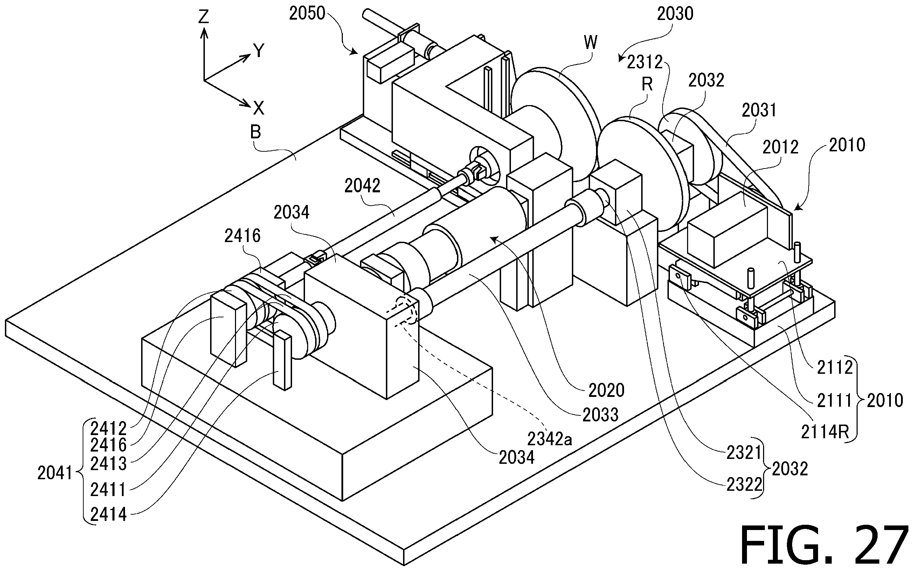

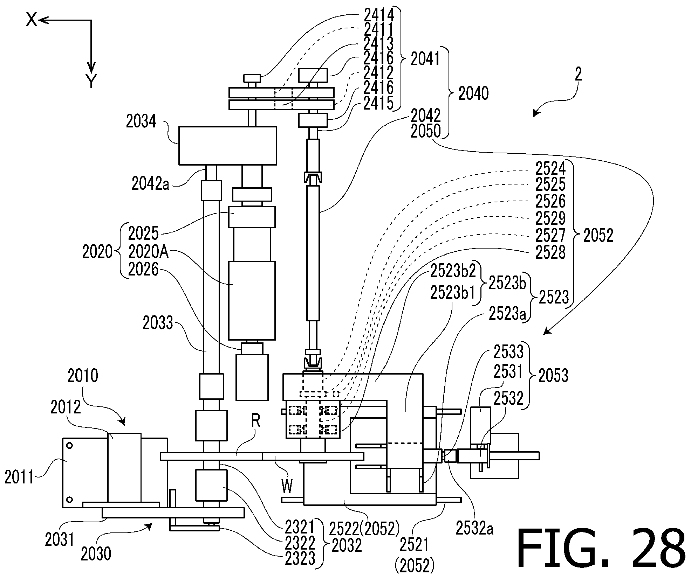

FIGS. 26 and 27 are perspective views of the second testing device 2 according to the first embodiment of the present invention, FIG. 26 is a view from the front side, and FIG. 27 is a view from the rear side. FIG. 28 is a plan view of the second testing device 2.

In FIG. 26, as shown by coordinate axes, a direction from the lower right to the upper left is defined as an X-axis direction, a direction from the upper right to the lower left is defined as a Y-axis direction, and a direction from the bottom to the top is defined as a Z-axis direction. The X-axis direction and the Y-axis direction are horizontal directions orthogonal to each other, and the Z-axis direction is a vertical direction. Arbitrary straight lines extending in the X-axis direction, the Y-axis direction, and the Z-axis direction are referred to as an X-axis, a Y-axis, and a Z-axis, respectively. An X-axis positive direction is referred to as a left side, an X-axis negative direction is referred to as a right side, a Y-axis positive direction is referred to as a front side, a Y-axis negative direction is referred to as a rear side, a Z-axis positive direction is referred to as an upper side, and a Z-axis negative direction is referred to as a lower side.

The second testing device 2 is a device capable of simulating an interaction between a rail and a wheel that occurs when a railroad vehicle is traveling and evaluating, for example, adhesion characteristics between the rail and the wheel. In the present embodiment, a rail wheel R having a cross-sectional shape in which an outer peripheral portion simulates a rail head is used, and a wheel for test (hereinafter referred to as "test wheel W") is pressed against the rail wheel R and both are rotated, thereby simulating the interaction between the rail and the wheel when a railroad vehicle is traveling.

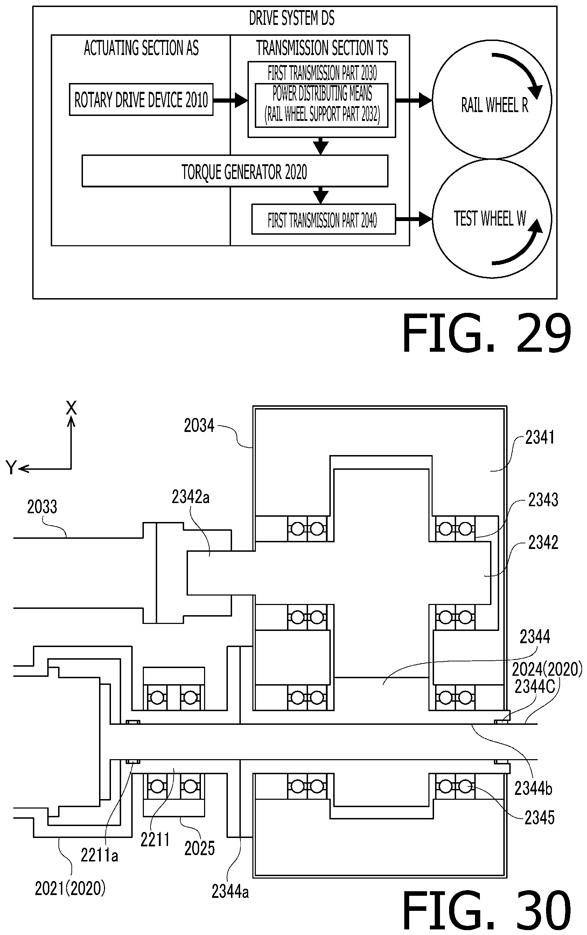

The second testing device 2 includes a drive system DS that drives the rail wheel R and the test wheel W. FIG. 29 is a block diagram showing a schematic configuration of the drive system DS. The drive system DS includes an actuating section AS that generates mechanical power (hereinafter, simply referred to as "power"), and a transmission section TS that transmits the power generated by the actuating section AS to the rail wheels R and the test wheels W to be driven, and constitutes a power circulation system together with the rail wheel R and the test wheel W as will be described later.

The actuating section AS includes a rotary drive device 2010 (speed control drive device) capable of controlling a rotation speed of a driven object, and a torque generator 2020 (torque control drive device) capable of controlling a torque to be applied to a driven object. The drive system DS of the present embodiment adopts a configuration in which drive control is divided into speed control and torque control, and the speed control and the torque control are performed by dedicated drive devices, thereby enabling high-speed and high-torque driving while using motors having relatively small capacities. Furthermore, the drive system DS realizes higher energy utilization efficiency than a conventional device by adopting the power circulation system.

The transmission section TS includes a first transmission part 2030 and a second transmission part 2040. The torque generator 2020 also constitutes a portion of the transmission section TS. The first transmission part 2030 transmits rotation output from the rotary drive device 2010 to the rail wheel R and the torque generator 2020. The torque generator 2020 outputs power generated by the torque generator 2020 itself by adding the power to power transmitted from the rotary drive device 2010. The second transmission part 2040 transmits the output of the torque generator 2020 to the test wheel W.

The rail wheel R and the test wheel W are attached to the second testing device 2 so as to be aligned in the radial direction with the rotation axes oriented parallel to each other. When performing a test, the test wheel W and the rail wheel R are rotationally driven in directions opposite to each other at substantially the same peripheral speed (i.e., a linear speed of an outer peripheral surface) in a state where the test wheel W is pressed against the rail wheel R and an outer peripheral surface (tread surface) of the test wheel W is in contact with an outer peripheral surface (top surface) of the rail wheel R. At this time, the transmission section TS constitutes a power circulation system (i.e., a loop of power transmission shafts) via the test wheel W and the rail wheel R. The torque generator 2020 applies torque to the power circulation system by providing a phase difference between an input shaft (the first transmission part 2030) and an output shaft (the second transmission part 2040). By adopting the power circulation system, the second testing device 2 can apply torque (or tangential force) to the test wheel W while hardly absorbing the generated power, and thus can operate with a relatively small amount of energy consumption.

The first transmission part 2030 of the present embodiment is configured such that the rail wheel R and the test wheel W are rotationally driven at the same peripheral speed in directions opposite to each other in a state where the operation of the torque generator 2020 (specifically, a second electric motor 2022 which will be described later) is stopped. The first transmission part 2030 of the present embodiment may be configured such that a peripheral speed difference is generated between the rail wheel R and the test wheel W in a state where the operation of the torque generator 2020 is stopped. However, in this case, the amount of operation of the torque generator 2020 increases to compensate for the peripheral speed difference, and thus the energy consumption increases. The first transmission part 2030 of the present embodiment is configured such that the rail wheel R and the torque generator 2020 are rotationally driven at the same rotation speed, but the first transmission part 2030 may be configured such that the rail wheel R and the torque generator 2020 are rotated at different rotation speeds provided the rail wheel R and the test wheel W are rotationally driven at substantially the same peripheral speed.

As shown in FIGS. 26-28, the rotary drive device 2010 includes a tension adjusting table 2011, and a first electric motor 2012 (speed control motor) installed on the tension adjusting table 2011. The first electric motor 2012 of the present embodiment is a so-called inverter motor driven by an inverter, but another type of motor of which rotation speed can be controlled, such as a servo motor or a stepping motor, may be used for the first electric motor 2012. The rotary drive device 2010 may also include a speed reducer that reduces rotation output from the first electric motor 2012. The tension adjusting table 2011 will be described later.

The first transmission part 2030 includes a first belt mechanism part 2031, a rail wheel support part 2032, a shaft 2033, and a gear box 2034 (gear device).

As shown in FIG. 26, the first belt mechanism part 2031 includes a drive pulley 2311 driven by the rotary drive device 2010, a driven pulley 2312 attached to an input shaft (one of shafts 2321 which will be described later) of the rail wheel support part 2032, and a belt 2313 wound around the drive pulley 2311 and the driven pulley 2312.

Rotation output from the rotary drive device 2010 is transmitted to the rail wheel support part 2032 by the first belt mechanism part 2031 of the first transmission part 2030.

The belt 2313 of the present embodiment is a V-ribbed belt having a plurality of V-shaped ribs arranged in a width direction, but another type of belt such as a V-belt having a trapezoidal cross-sectional shape, a toothed belt, a flat belt, and a round belt may be used.

The first belt mechanism part 2031 of the present embodiment is provided with a single belt transmission unit consisting of the drive pulley 2311, the driven pulley 2312, and the belt 2313, but may be provided with two or more belt transmission units connected in parallel or in series.

Power transmission from the rotary drive device 2010 to the rail wheel support part 2032 is not limited to belt transmission but another type of winding transmission such as a chain transmission or a wire transmission, or another power transmission system such as a gear transmission may be used. The rotary drive device 2010 and the rail wheel support part 2032 may be disposed coaxially (i.e., so that rotation axes thereof coincide with each other), and an output shaft of the rotary drive device 2010 and an input shaft of the rail wheel support part 2032 may be directly connected.

Now, the tension adjusting table 2011 of the rotary drive device 2010 will be described. As shown in FIG. 27, the tension adjusting table 2011 includes a fixed frame 2111 fixed to a base B, and a movable frame 2112 to which the rotary drive device 2010 is attached. The movable frame 2112 is pivotally connected, at a right end portion thereof, to the fixed frame 2111 via a rod 2114R extending in the Y-axis direction so that inclination of the movable frame 2112 about the Y-axis can be adjusted. By changing the inclination of the movable frame 2112, a distance between the drive pulley 2311 (FIG. 26) and the driven pulley 2312 can be changed, and a tension of the belt 2313 wound around the drive pulley 2311 and the driven pulley 2312 can thus be adjusted.

As shown in FIGS. 27 and 28, the rail wheel support part 2032 includes a pair of bearings 2322 and a pair of shafts 2321. The pair of bearings 2322 are arranged in the front-rear direction (i.e., the Y-axis direction) with rotation axes thereof oriented in the Y-axis direction, and are coaxially arranged.

One of the shafts 2321 is rotatably supported by the bearing 2322 on the front side, and the other of the shafts 2321 is rotatably supported by the bearing 2322 on the rear side. Each shaft 2321 is a flanged shaft which a flange for mounting the rail wheel R is provided at one end thereof, and one shaft 2321 is removably and coaxially attached to each of both side surfaces of the rail wheel R by bolts.

The driven pulley 2312 of the first belt mechanism part 2031 is attached to the other end of the shaft 2321 on the front side. One end of the shaft 2033 is connected to the other end of the shaft 2321 on the rear side. The other end of the shaft 2033 is connected to an input shaft 2342a of the gear box 2034.

A portion of the power transmitted by the first belt mechanism part 2031 to the rail wheel support part 2032 is applied to the rail wheel R, and the remainder is applied to the shaft 2033 (and further to the test wheel W via the torque generator 2020 and the second transmission part 2040). That is, the rail wheel support part 2032 (specifically, the shaft 2321) functions as power distribution means that distributes the power generated by the first electric motor 2012 and transmitted by the first belt mechanism part 2031 to the rail wheel R and the shaft 2033 (and finally to the test wheel W).

The coupling structure between the shaft 2321 and the rail wheel R is not limited to the coupling by the flange, and other coupling structures such as a structure in which the shaft 2321 is fitted into a through hole provided at the center of the rail wheel R may be used.

The rail wheel support part 2032 is provided with a rotary encoder 2323 (rotation speed detecting means) that detects the rotation speed of the rail wheel R.

FIG. 30 is a schematic cross-sectional view of the gear box 2034 and the periphery thereof taken along a horizontal plane. The gear box 2034 includes a case 2341, a pair of first bearings 2343 and a pair of second bearings 2345 attached to the case 2341, a first gear 2342 (input side gear) rotatably supported by the pair of first bearings 2343, and a second gear 2344 (output side gear) rotatably supported by the pair of second bearings 2345.

The first gear 2342 and the second gear 2344 are arranged side by side in the X-axis direction so that their rotation axes are oriented in the Y-axis direction and their teeth mesh with each other, and are accommodated in the case 2341. One end portion of the first gear 2342 is an input shaft 2342a of the gear box 2034, and is connected to the other end of the shaft 2033. One end portion of the second gear 2344 is an output shaft 2344a of the gear box 2034, and is connected to one end portion of a later-described casing 2021 of the torque generator 2020.

The second gear 2344 is formed with a cylindrical through hole 2344b having a rotation axis as a center line. A later-described output shaft 2024 of the torque generator 2020 is inserted into the through hole 2344b from one end of the second gear 2344 (the left end in FIG. 30, i.e., a distal end of the output shaft 2344a), penetrates the second gear 2344, and a distal end portion thereof protrudes from the other end of the second gear 2344.

In the present embodiment, the first gear 2342 and the second gear 2344 have the same number of teeth, and thus gear ratio of the gear box 2034 is 1. The gear ratio of the gear box 2034 may be set to a value other than 1 provided the test wheel W and the rail wheel R are rotated in opposite directions at substantially the same peripheral speed.

Power transmission from the shaft 2033 to the torque generator 2020 is not limited to the gear transmission, and other transmission systems, for example, a winding transmission such as a belt transmission and a chain transmission may be used.

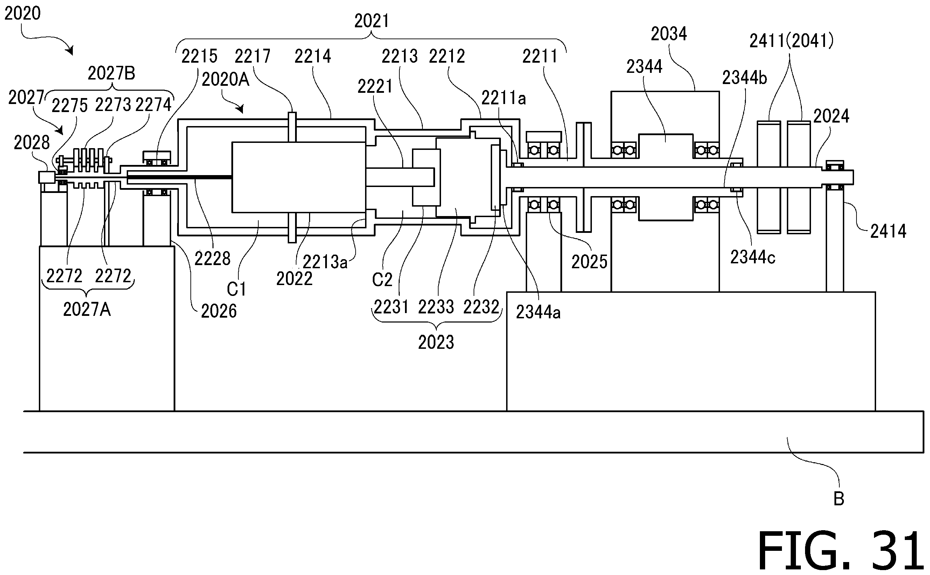

FIG. 31 is a schematic cross-sectional view of the torque generator 2020, the gear box 2034, and the periphery thereof taken along a plane perpendicular to the X-axis direction.

The torque generator 2020 includes a main body 2020A (rotating part) rotationally driven by the rotary drive device 2010, and a pair of bearing units 2025 and 2026 that rotatably support the main body 2020A.

The main body 2020A includes the substantially cylindrical casing 2021 (rotating frame) supported by the bearing units 2025 and 2026, the second electric motor 2022 and a speed reducer 2023 attached to the casing 2021, and the output shaft 2024. The output shaft 2024 is disposed coaxially with the casing 2021. A later described shaft 2221 and rotor 2222 of the second electric motor 2022 may be disposed coaxially with the casing 2021. By disposing the second electric motor 2022 coaxially with the casing 2021, imbalance of the main body 2020A is reduced, and the main body 2020A can be smoothly rotated (i.e., with less unnecessary fluctuations in rotation speed and torque). The second electric motor 2022 of the present embodiment is an AC servo motor, but another type of electric motor of which drive amount (rotation angle) can be controlled, such as a DC servo motor and a stepping motor, may be used as the second electric motor 2022.

A reduction ratio of the speed reducer 2023 is set in the range of 45/1 to 120/1 (more preferably, in the range of 55/1 to 100/1). This makes it possible to measure a slip ratio with an accuracy of 0.01% while applying a tangential force $f_T$ of sufficient magnitude.

The casing 2021 has a substantially cylindrical first cylindrical part 2212 and a substantially cylindrical second cylindrical part 2214 (motor accommodating part), a connecting part 2213 that connects the first cylindrical part 2212 and the second cylindrical part 2214, a first shaft part 2211 connected to the first cylindrical part 2212, and a second shaft part 2215 connected to the second cylindrical part 2214. The first shaft part 2211, the first cylindrical part 2212, the connecting part 2213, the second cylindrical part 2214, and the second shaft part 2215 are all cylindrical members having hollow portions penetrating in axial directions, and are coaxially connected in this order to form the cylindrical casing 2021. The casing 2021 is supported by the bearing unit 2025 at the first shaft part 2211, and is supported by the bearing unit 2026 at the second shaft part 2215. A distal end portion of the first shaft part 2211 is an input shaft of the torque generator 2020, and is connected to the output shaft 2344a of the gear box 2034.

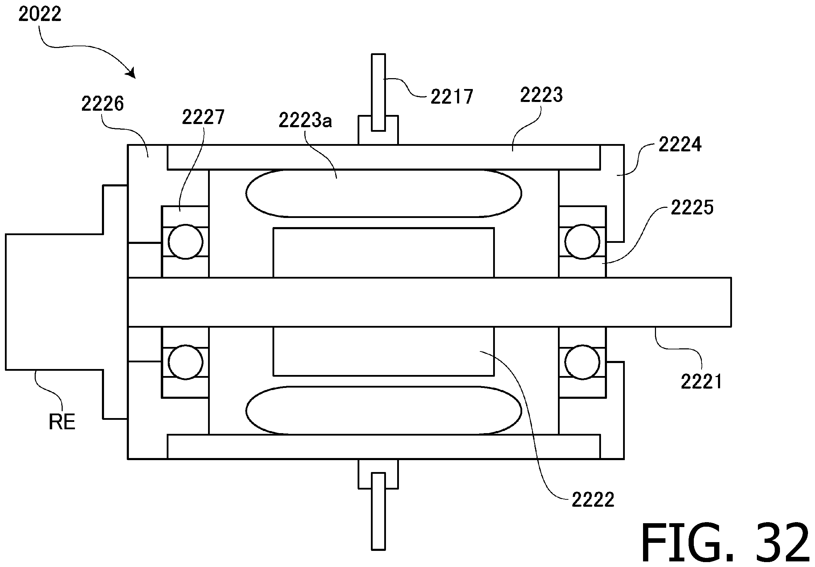

FIG. 32 is a longitudinal cross-sectional view showing a schematic configuration of the second electric motor 2022. The second electric motor 2022 includes the shaft 2221, the rotor 2222 composed of a permanent magnet or the like and integrally coupled to the shaft 2221, a cylindrical stator 2223 having to which a coil 2223a is provided on an inner periphery, a pair of flanges 2224 and 2226 attached to both ends of the stator 2223 so as to close openings, a pair of bearings 2225, 2227 attached to the flanges 2224 and 2226, respectively, and a rotary encoder RE that detects an angular position (phase) of the shaft 2221.

The shaft 2221 is rotatably supported by the pair of bearings 2225 and 2227. One end portion (a right end portion in FIG. 32) of the shaft 2221 passes through the flange 2224 and the bearing 2225 and protrudes to the outside, and serves as an output shaft of the second electric motor 2022. The other end portion (the left end portion in FIG. 32) of the shaft 2221 is connected to the rotary encoder RE.

As shown in FIG. 31, the second electric motor 2022 is accommodated in a hollow portion (compartment C1) of the second cylindrical part 2214 of the casing 2021. An inner flange part 2213a projecting inward from an inner periphery is formed at one end portion (the left end portion in FIG. 31) of the connecting part 2213 of the casing 2021. The stator 2223 (FIG. 32) of the second electric motor 2022 is fixed to the second cylindrical part 2214 via a plurality of rod-shaped connecting members 2217 disposed radially about a rotation axis of the torque generator 2020. The connecting member 2217 is, for example, a stud bolt or a full-threaded bolt having male threads formed at both end portions. The flange 2224 (FIG. 32) of the second electric motor 2022 is supported by the inner flange part 2213a of the connecting part 2213.

The speed reducer 2023 is accommodated in a compartment C2 surrounded by the connecting part 2213 and the first cylindrical part 2212 of the casing 2021. The shaft 2221 of the second electric motor 2022 is connected to an input shaft 2231 of the speed reducer 2023, and the output shaft 2024 of the torque generator 2020 is connected to an output shaft 2232 of the speed reducer 2023. The torque generator 2020 may be configured such that the output shaft 2024 is directly connected to the shaft 2221 of the second electric motor 2022 without providing the speed reducer 2023.

A case 2233 of the speed reducer 2023 is fixed to the other end portion of the connecting part 2213. That is, the flange 2224 (FIG. 32) of the second electric motor 2022 and the case 2233 of the speed reducer 2023 are integrally connected by a single cylindrical connecting part 2213. Therefore, the second electric motor 2022 and the speed reducer 2023 are integrally connected with high rigidity, and a bending moment is less likely to be applied to the shaft 2221. Since this reduces friction that the shaft 2221 receives from the bearings 2225 and 2227, control accuracy of torque by the torque generator 2020 improves.

The output shaft 2024 of the torque generator 2020 passes through the first shaft part 2211 of the casing 2021 and a hollow portion of the gear box 2034 (specifically, the second gear 2344), and protrudes to the rear side of the gear box 2034. The first shaft part 2211 of the casing 2021 and an inner periphery of the second gear 2344 of the gear box 2034 are provided with a bearing 2211a and a bearing 2344c, respectively, that rotatably support the output shaft 2024.

Two drive pulleys 2411 of a second belt mechanism part 2041, which will be described later, are attached to a distal end portion of the output shaft 2024 protruding rearward from the gear box 2034. The distal end portion of the output shaft 2024 is rotatably supported by a bearing unit 2414 of the second belt mechanism part 2041.

A slip ring part 2027 is provided in front of and adjacent to the bearing unit 2026. The slip ring part 2027 consists of a movable part 2027A that rotates together with the main body 2020A of the torque generator 2020, and a fixed part 2027B fixed to the base B.

The movable part 2027A includes a ring support tube 2271 coaxially connected to the second shaft part 2215 of the torque generator 2020, and a plurality of slip rings 2272 coaxially attached at intervals on an outer periphery of the ring support tube 2271.

A cable 2228 of the second electric motor 2022 of the torque generator 2020 passes through the second shaft part 2215 of the casing 2021. A plurality of electric wires constituting the cable 2228 pass through a hollow portion of the ring support tube 2271 and are connected to the corresponding slip rings 2272.

The fixed part 2027B includes a brush support part 2274, a plurality of brushes 2273 supported by the brush support part 2274, and a bearing part 2275 that rotatably supports a distal end portion of the ring support tube 2271. The brushes 2273 are arranged at intervals in the Y-axis direction so as to be in contact with an outer peripheral surface of the corresponding slip rings 2272. The brushes 2273 are wired to a servo amplifier 2022a or the like which will be described later.

A rotary encoder 228 that detects a rotation speed of the ring support tube 2271 (i.e., a rotation speed of the casing 2021 which is the input shaft of the torque generator 2020) is attached to the bearing part 2275.

As shown in FIG. 28, the second transmission part 2040 includes the second belt mechanism part 2041, a slide type constant velocity joint 2042, and a wheel support part 2050.

The second belt mechanism part 2041 includes two sets of belt transmission units each consisting of the drive pulley 2411, a driven pulley 2412, and a belt 2413, the bearing unit 2414, a shaft 415, and a pair of bearing units 2416.

As described above, the two drive pulleys 2411 are attached to the distal end portion of the output shaft 2024 of the torque generator 2020 protruding from the gear box 2034. The bearing unit 2414 rotatably supports the distal end portion of the output shaft 2024.

An additional bearing unit 2414 may be provided between the gear box 2034 and the drive pulley 2411 to support the distal end portion of the output shaft 2024 with a pair of bearing units 2414. In the present embodiment, the drive pulley 2411 is attached to the output shaft 2024 of the torque generator 2020, but a shaft for supporting the drive pulley 2411 may be provided separately from the output shaft 2024, and the shaft connected to the output shaft 2024 may be supported by the bearing unit 2414.

The two driven pulleys 2412 are attached to the shaft 415 which is rotatably supported by the pair of bearing units 2416.

The belts 2413 are wound around corresponding drive pulleys 2411 and driven pulleys 2412.

The belt 2413 of the present embodiment is a toothed belt having core wires of steel wires. The belt 2413 may be a belt having core wires formed of so-called super fibers such as carbon fibers, aramid fibers, and ultra-high molecular weight polyethylene fibers. By using lightweight and high-strength core wires such as carbon core wires, it is possible to drive the carriage 20 at a high acceleration using a motor having a relatively low output (or to apply a high driving/braking force to the test wheel W), thereby making it possible to downsize the second testing device 2. When a motor having the same output is used, it is possible to improve performance of the second testing device 2 by using the lightweight belt 2413 having core wires formed of so-called super fibers. A general automotive or industrial timing belt may be used as the belt 2413. A flat belt or a V-belt may be used as the belt 2413 in place of the toothed belt. Such belts that can be used as the belt 2413 may also be used as the belt 2313 of the first belt mechanism part 2031.

The second belt mechanism part 2041 of the present embodiment includes a pair of belt transmission units connected in parallel, but may be configured to include a single belt transmission unit or three or more belt transmission units connected in parallel.

The power transmission from the torque generator 2020 to the slide type constant velocity joint 2042 is not limited to the belt transmission, and another type of winding transmission such as a chain transmission or a wire transmission, or another transmission system such as a gear transmission may be used. The torque generator 2020 and the slide type constant velocity joint 2042 may be arranged substantially linearly (or in a dog-leg shape), and the output shaft 2024 of the torque generator 2020 and the input shaft of the slide type constant velocity joint 2042 may be directly connected.

The wheel support part 2050 is connected to the torque generator 2020 via the slide type constant velocity joint 2042. Specifically, one end (i.e., an input shaft) of the slide type constant velocity joint 2042 is connected to the shaft 415 of the second belt mechanism part 2041, and the other end (an output shaft) of the slide type constant velocity joint 2042 is connected to a later-described spindle 2527 of the wheel support part 2050.

The slide type constant velocity joint 2042 is configured to be able to smoothly transmit rotation without rotational fluctuation regardless of an operating angle (i.e., an angle formed by the input shaft and the output shaft). A length (transmission distance) of the slide type constant velocity joint 2042 in an axial direction is also variable.

As will be described later, the spindle 2527 is supported so that a position thereof can be changed. By connecting the spindle 2527 to the shaft 415 of the second belt mechanism part 2041 (or to the output shaft 2024 of the torque generator 2020) via the slide type constant velocity joint 2042, even if the position of the spindle 2527 changes, the slide type constant velocity joint 2042 flexibly follows this change. Therefore, large strain is prevented from being applied to the spindle 2527 or the shaft 415 (or the output shaft 2024 of the torque generator 2020), and rotation can be smoothly transmitted to the spindle 2527. The use of the slide type constant velocity joint 2042 also prevents the rotation speed transmitted to the spindle 2527 from changing depending on the position of the spindle 2527 (i.e., the operating angle of the slide type constant velocity joint 2042).

As shown in FIG. 26, the wheel support part 2050 includes a fixed base 2051, a main body 2052 mounted on the fixed base 2051, and a wheel load applying part 2053.

As shown in FIG. 28, the main body 2052 includes a movable base 2522, a pair of linear guides 2521 that support the movable base 2522 movably in the X-axis direction with respect to the fixed base 2051, a support frame 2523 mounted on the movable base 2522, a bearing unit 2528 attached to the support frame 2523, the spindle 2527 rotatably supported by the bearing unit 2528, a torque sensor 2524 and a detection gear 2525 coaxially attached to the spindle 2527, and a rotation detector 2526 that detects rotation of the detection gear 2525. The linear guide 2521 is a guideway-type circulating rolling bearing provided with a carriage capable of traveling on a rail through a linear rail (guideway) and rolling bodies, but another type of linear guide mechanism may be used as the linear guide 2521. The linear guide 2521 constitutes a portion of the wheel load applying part 2053. The detection gear 2525 and the rotation detector 2526 constitute a rotation speed detecting means that detects rotation speed of the spindle 2527.

The support frame 2523 has a support column 2523a fixed to the movable base 2522 and an arm 2523b fixed to the support column 2523a. The support column 2523a of the present embodiment is an L-shaped bracket, but a support column 2523a of another form may be used. Alternatively, the support column 2523a and the arm 2523b may be integrally formed. The arm 2523b is a substantially L-shaped structure as viewed from above, having a base part 2523b1 extending rearward from an upper portion of the support column 2523a, and a trunk part 2523b2 extending leftward from a rear end portion of the base portion 2523b1. A hollow part penetrating in the Y-axis direction is formed at a distal end portion of the trunk part 2523b2. A drive shaft (specifically, the slide type constant velocity joint 2042, the torque sensor 2524, the detection gear 2525, and the spindle 2527 that are coupled together) is inserted in the hollow part.

The bearing unit 2528 is attached to the arm 2523b. Specifically, the bearing unit 2528 is attached to a front surface of the distal end portion of the trunk part 2523b2 with a rotation axis thereof oriented in the Y-axis direction. The bearing unit 2528 is provided with a plurality of three component force sensors 2529 (tangential force detecting means, first lateral pressure detecting means) that detect force received from the spindle 2527. The three component force sensor 2529 is a piezoelectric force sensor, but another type of force sensor may be used as the three component force sensor 2529.

The spindle 2527 is connected to the output shaft of the slide type constant velocity joint 2042 via the detection gear 2525 and the torque sensor 2524. The detection gear 2525 and the torque sensor 2524 are accommodated in a hollow portion formed at the distal end portion of the trunk part 2523b2. The test wheel W is attached to an attaching part provided at a distal end of the spindle 2527. The torque sensor 2524 detects torque acting on the spindle 2527 (i.e., acting on the test wheel W).

The rotation detector 2526 is disposed to face an outer peripheral surface of the detection gear 2525, and is fixed to the trunk part 2523b2 of the support frame 2523. The rotation detector 2526 is, for example, a non-contact type rotation detector such as an optical type, an electromagnetic type, or a magnetoelectric type rotation detector, and detects a change in an angular position of the detection gear 2525.

The wheel load applying part 2053 is a mechanism for applying a wheel load of a predetermined magnitude to the test wheel W by moving the main body 2052 of the wheel support part 2050 in the X-axis direction and pressing the test wheel W attached to the spindle 2527 against the rail wheel R.

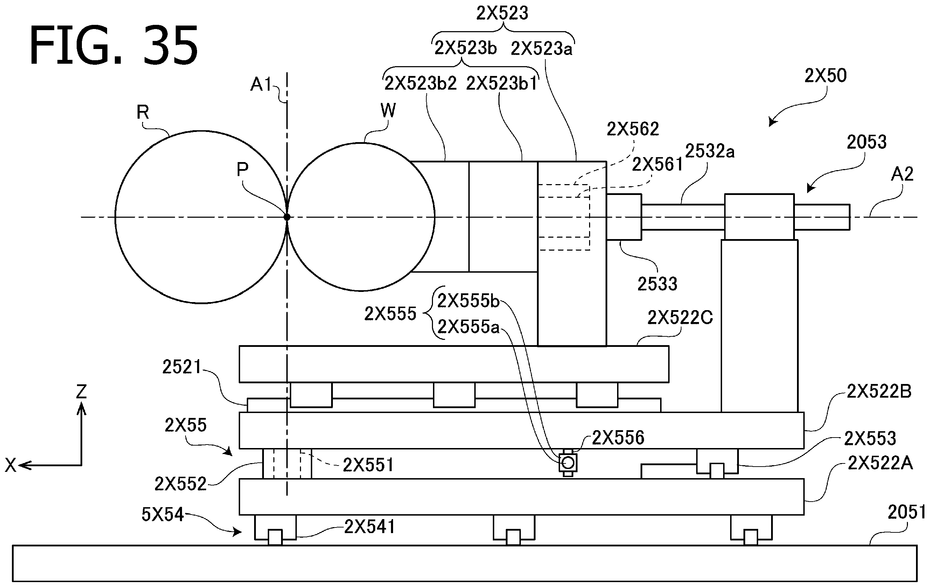

The wheel load applying part 2053 includes a motor 2531, a motion converter 2532 that converts rotational motion of the motor 2531 into linear motion in the X-axis direction, and a wheel load detector 2533 (FIG. 35) for detecting wheel load acting on the test wheel W.

The motor 2531 is an AC servo motor, but another type of electric motor of which drive amount (rotation angle) can be controlled, such as a DC servo motor or a stepping motor, may be used as the motor 2531.

The motion converter 2532 of the present embodiment is, for example, a screw jack in which a speed reducer such as a worm gear device and a feed screw mechanism such as a ball screw are combined, but another type of motion converter may be used. A linear motion part 2532a of the motion converter 2532 is fixed to the support frame 2523 via the wheel load detector 2533.

When the motion converter 2532 is driven by the motor 2531, the support frame 2523 and the spindle 2527 supported by the support frame 2523 move in the X-axis direction together with the linear motion part 2532a. As a result, the test wheel W attached to the spindle 2527 moves forward and backward with respect to the rail wheel R. When the motion converter 2532 is further driven by the motor 2531 in a direction in which the test wheel W moves toward the rail wheel R (i.e., the X-axis positive direction) in a state where the test wheel W and the rail wheel R are in contact with each other, the test wheel W is pressed against the rail wheel R, and the wheel load is applied to the test wheel W.

The wheel load detector 2533 is a force sensor that detects a force in the X-axis direction (i.e., wheel load) applied to the test wheel W by the wheel load applying part 2053 via the support frame 2523 and the spindle 2527. The wheel load detector 2533 of the present embodiment is a strain gauge type load cell, but another type of force sensor, such as a piezoelectric force sensor, may be used as the wheel load detector 2533. A controller 2072, which will be described later, controls driving of the motor 2531 based on the detection result by the wheel load detector 2533 so that the wheel load of a predetermined magnitude is applied to the test wheel W.

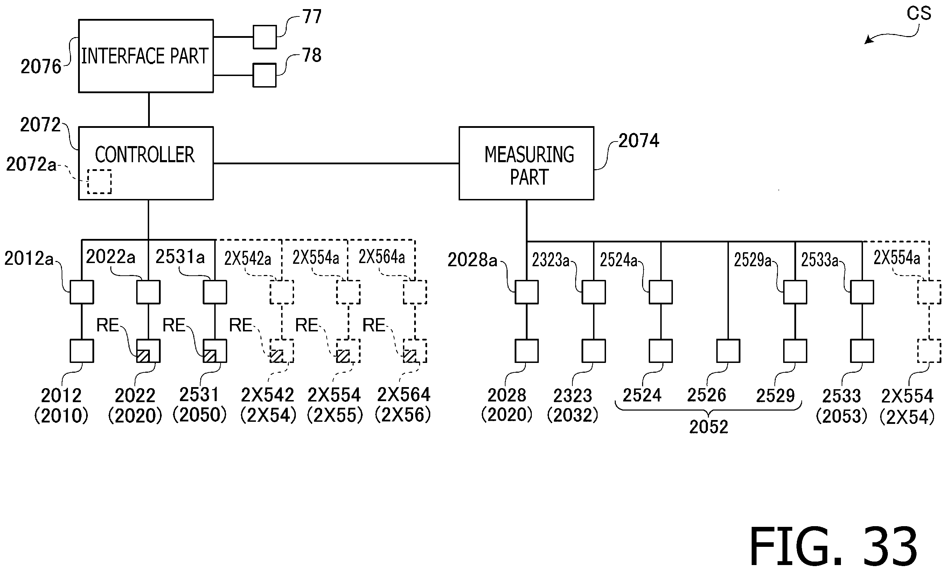

FIG. 33 is a block diagram showing a schematic configuration of a control system CS of the second testing device 2. The control system CS includes the controller 2072 that controls operations of the entire second testing device 2, a measurement part 2074 that performs various measurements based on signals from various detectors provided in the second testing device 2, and an interface part 2076 that performs input and output to and from the outside.

The second electric motor 2022 and the motor 2531 are connected to the controller 2072 via servo amplifiers 2022a and 2531a, respectively, and the first electric motor 2012 is connected to the controller 2072 via a driver 2012a (inverter circuit).

Rotary encoders 228 and 2323, the torque sensor 2524, the three component force sensors 2529, and the wheel load detector 2533 are connected to the measurement part 2074 through amplifiers 2028a, 2323a, 2524a, 2529a, and 533a, respectively. In FIG. 33, only one representative set of the three component force sensors 2529 and the amplifiers 2529a is shown. The rotation detector 2526 which an amplification circuit and an analog-to-digital conversion circuit are built in is directly connected to the measurement part 2074.

The measurement part 2074 measures a rotation speed of the rail wheel R based on a signal of the rotary encoder 2323, measures a rotation speed of the input shaft (casing 2021) of the torque generator 2020 based on a signal of the rotary encoder 228, and measures a rotation speed of the spindle 2527 (i.e., a rotation speed of the test wheel W) based on a signal of the rotation detector 2526. The measurement part 2074 measures a torque acting on the test wheel W based on a signal of the torque sensor 2524, measures a tangential force (longitudinal force, or longitudinal creep force) and a lateral pressure (thrust load) acting on the test wheel W based on signals of the plurality of three component force sensors 2529, and measures a wheel road based on a signal of the wheel load detector 2533. That is, the measurement part 2074 functions as a first rotation speed measuring means that measures the rotation speed of the rail wheel R, a second rotation speed measuring means that measures the rotation speed of the torque generator 2020, a third rotation speed measuring means that measures the rotation speed of the test wheel W, a torque measuring means that measures the torque acting on the test wheel W, a tangential force measuring means that measures the tangential force acting on the test wheel W, a lateral pressure measuring means that measures the lateral pressure acting on the test wheel W, and a wheel load measuring means that measures the wheel load applied to the test wheel W. The measurement part 2074 transmits these measured values to the controller 2072.

Although the second testing device 2 of the present embodiment is provided with a large number of measuring means (and corresponding detecting means) because it is a relatively highly versatile device, the second testing device 2 does not need to be provided with all of these measuring means and detecting means, and may be provided with one or more sets of measuring means and detecting means that are appropriately selected according to matters to be examined by the test.

Pieces of phase information of shafts detected by built-in rotary encoders RE of the servo motors (the second electric motor 2022 and the motor 531) are input to the controller 2072 via the corresponding servo amplifiers 2022a and 2531a.

The interface part 2076 includes, for example, one or more of a user interface for input by and output to a user, a network interface for connection to various types of networks such as a LAN (Local Area Network), and various types of communication interfaces such as a USB (Universal Serial Bus) and a GPIB (General Purpose Interface Bus) for connection to external devices. The user interface includes, for example, one or more of various types of operation switches, indicators, various types of display devices such as an LCD (Liquid Crystal Display), various types of pointing devices such as a mouse and a touch panel, and various types of input/output devices such as a touch screen, a video camera, a printer, a scanner, a buzzer, a speaker, a microphone and a memory card reader/writer.

The controller 2072 is connected to the server 77 and the analyzing device 78 (e.g., a workstation, a PC, a cloud computing service, or the like) via, for example, the interface part 2076 and a LAN. Data of test conditions and data of test results are stored in the server 77. An advanced analysis based on test results by the first testing device 1 and the second testing device 2 is performed by the analyzing device 78.

The controller 2072 controls driving of the first electric motor 2012 so that the rail wheel R rotate at a set rotation speed based on setting data of the rotation speed (or linear speed) of the rail wheel R input via the interface part 2076 and the measurement result of the rotation speed of the rail wheel R by the measurement part 2074.

The controller 2072 controls driving of the motor 531 of the wheel load applying part 2053 so that the set wheel load is applied to the test wheel W based on wheel load setting data input via the interface part 2076 and a wheel load measurement result by the measurement part 2074.

The controller 2072 controls driving of the second electric motor 2022 of the torque generator 2020 based on the torque setting data of the test wheel W input via the interface part 2076 and the torque measurement result by the measurement part 2074 so that the set torque is applied to the test wheel W.

Next, an example of a method of performing a test using the second testing device 2 will be described. First, the controller 2072 drives the motor 531 of the wheel load applying part 2053 in a state where the rail wheel R and the test wheel W are attached to the second testing device 2, brings the test wheel W close to and then in contact with the rail wheel R, and applies a set wheel load to the test wheel W. As the set value of the wheel load, a constant value or a varying value that varies with time can be set.

Then, the controller 2072 drives the first electric motor 2012 of the rotary drive device 2010 so that the rail wheel R rotates at a set rotation speed. As the set value of the rotation speed of the rail wheels R, a constant value or a varying value that varies with time can be set. The controller 2072 also controls the second electric motor 2022 so that the torque of the test wheel W becomes zero (no load) until the rotation speed of the rail wheel R reaches the set value.

When the rotation speed of the rail wheel R reaches the set value, the controller 2072 controls the driving of the second electric motor 2022 of the torque generator 2020 so that a set torque is applied to the test wheel W. As the set value of the torque of the test wheel W, a constant value or a varying value that varies with time can be set. The driving of the second electric motor 2022 may be controlled so that the set torque is applied to the test wheel W from the start of the rotational driving of the rail wheel R.

In this state, the controller 2072 causes the rail wheel R and the test wheel W to rotate while continuously measuring the rotation speed of the rail wheel R, the torque of the test wheels W, the tangential force, the lateral force, and the wheel load over a predetermined time (test time). At this time, the controller 2072 stores each measured value in a storage device 2072a of the controller 2072 (or a storage means accessible by the controller 2072, such as, for example, a server connected to the controller 2072 via a LAN) in association with a measured time.

When the predetermined time elapses, the controller 2072 controls the driving of the second electric motor 2022 of the torque generator 2020 so that the torque of the test wheel W becomes zero. Then, the controller 2072 controls the first electric motor 2012 of the rotary drive device 2010 to gradually reduce the rotation speed of the rail wheel R and stop the rotation, and then drives the motor 531 of the wheel load applying part 2053 to separate the test wheel W from the rail wheel R by a predetermined distance, and ends the test.

The test procedure described above is merely an example of a test procedure that can be performed using the second testing device 2, and tests can be performed using various other test procedures.

The second testing device 2 has a function of measuring a $\mu$-S characteristic between the rail wheel R and the test wheel W. The $\mu$-S characteristic is measured, for example, by continuously changing the torque (or the tangential force) acting on the test wheel W while causing the rail wheel R to rotate at a predetermined peripheral speed, and continuously measuring changes in a slip ratio S and a friction coefficient $\mu$ during traveling.

The slip ratio S is calculated by the following formula.

$$S = (V_C - V_T)/V_T$$

where

$V_C$: peripheral speed of the test wheel (m/s)
$V_T$: peripheral speed of the rail wheel R (m/s)

The peripheral speed Vc of the test wheel W is calculated by the following formula.

$$V_C = R_W \times \Omega_{2527} = R_W \times (\Omega_{2021} + \Omega_{2221}/r_{2023})$$

where

$\Omega_{2527}$: angular speed of the spindle 2527 (rad/s)

$\Omega_{2021}$: angular speed of the casing 2021 (rad/s)
$\Omega_{2221}$: angular speed of the shaft 2221 of the second electric motor 2022 (rad/s)
$r_{2033}$: speed reduction ratio of the speed reducer 2023
$R_W$: radius of the test wheel W (m)

The angular speed $\Omega_{2021}$ of the casing 2021 of the torque generator 2020 is detected by the rotary encoder 228, and the angular speed $\Omega_{2221}$ of the shaft 2221 of the second electric motor 2022 of the torque generator 2020 is detected by the rotary encoder RE of the second electric motor 2022.

A rotary encoder for detecting the angular speed $\Omega_{2527}$ of the spindle 2527 may be provided in the first transmission part 2024 (e.g., to the spindle 2527), and the peripheral speed Vc of the test wheel W may be calculated from the angular speed $\Omega_{2527}$.

The peripheral speed $V_T$ (m/s) of the rail wheel R is detected by the rotary encoder 2323.

The friction coefficient $\mu$ is calculated by the following formula.

$$\mu = f_T/f_W$$

where

$f_T$: tangential force (N)
$f_W$: wheel load (N)

The wheel load fw, which is a force in the vertical direction (X-axis direction) acting on the test wheel W, is detected by the six component force sensor 54 of the spindle part 50. The tangential force $f_T$ (also referred to as a traction force, a longitudinal force, or a longitudinal creep force), which is a force in the tangential direction (Z-axis direction) acting on the test wheel W, is calculated from the torque of the test wheel W detected by the torque sensor 2524. As the tangential force $f_T$, the one detected by the six component force sensor 54 may be used.

In the measurement by the second testing device 2 using the rail wheel R, since the rail top surface of the rail wheel R has a curvature in the traveling direction, a state of contact (e.g., a contact area, load distribution and the like) between the rail wheel R and the test wheel W is different from a state of contact between the test rail 63 and the test wheel W in the first testing device 1. Therefore, the $\mu$-S characteristic obtained by the test using the second testing device 2 is different from the $\mu$-S characteristic obtained by the test using the first testing device 1. The measurement result by the first testing device 1 using the test rail 63 which is the actual railroad rail more accurately reproduces behaviors in the actual railroad vehicle than the measurement result by the second testing device 2 using the rail wheel R.

On the other hand, while it is possible to perform the test in a high-speed range (e.g., 60km/h or more) with the second testing device 2, it is difficult to perform the test in the high-speed range with the first testing device 1 as the length of the test rail 63 is limited because the first testing device 1 is installed indoors.

Therefore, the wheel test system (specifically, the analyzing device 78) according to the present embodiment measures the $\mu$-S characteristic in a low speed range (e.g., 0 to 40 km/h) or a low to medium speed range (e.g., 0 to 60km/h) with the first testing device 1 and the second testing device 2, and determines a calculation formula (hereinafter referred to as a "correction formula") for converting the measurement result by the second testing device 2 into the measurement result by the first testing device 1 based on the comparison of the measurement results by the two devices. For a medium to high speed range (e.g., 40 km/h or more) or a high speed range (e.g., 60 km/h or more) where the measurement with the first testing device 1 is difficult, the measurement result of the $\mu$-S characteristic by the second testing device 2 is converted into the $\mu$-S characteristic corresponding to the measurement result of the $\mu$-S characteristic by the first testing device 1 with the correction formula. Then, the $\mu$-S characteristic in the low speed range (or low to medium speed range) measured by the first testing device 1 and the $\mu$-S characteristic in the medium to high speed range (or high speed range) converted from the measurement result by the second testing device 2 are connected to synthesize the $\mu$-S characteristic in the low speed range to the high speed range. This makes it possible to measure the $\mu$-S characteristic that is close to that of an actual railroad vehicle across the low speed range to the high speed range.

The correction formula is determined, for example, by regression analysis of a curve (error curve) of a difference between the $\mu$-S characteristic by the second testing device 2 and the $\mu$-S characteristic by the first testing device 1. Specifically, the correction formula is obtained by performing a single regression analysis (e.g., a least square method) with a friction coefficient measured by the first testing device 1 as $\mu_1$, a friction coefficient measured by the second testing device 2 as $\mu_2$, the slip ratio S as an explanatory variable, and a friction coefficient error $\mu_2 - \mu_1$ as an objective variable. As an approximation type (functional form), linear approximation, polynomial approximation, logarithmic approximation, exponential approximation or the like can be used.

Alternatively, a correction formula may be obtained by performing regression calculation using the slip ratio S as an explanatory variable and the friction coefficient ratio $\mu_1/\mu_2$ as an objective variable (correction coefficient).

In the present embodiment, the slip ratio S can be controlled or measured with high accuracy with the torque generator 30 of the first testing device 1 and the torque generator 2020 of the second testing device 2. That is, the torque generator 30 and the torque generator 2020 serve as slip ratio control devices.

In place of (or in addition to) the speed reducer 2023 or the gear box 2034 of the second testing device 2, a transmission may be provided in the second testing device 2. As a result, a wear/$\mu$-S combined testing device capable of performing both a wear test (endurance test) requiring a large peripheral speed and a $\mu$-S test requiring a large torque can be realized with one second testing device 2.

Second Embodiment

Next, a second embodiment of the present invention will be described. In the description of the second embodiment below, matters different from those of the first embodiment described above will be mainly described, and the same or corresponding reference numerals are given to the same or corresponding configurations as those of the first embodiment, and redundant descriptions are omitted.

A wheel testing system according to the second embodiment of the present invention includes a wheel testing device 2X in place of the wheel testing device 2 of the first embodiment described above. Therefore, in the following description, the wheel testing device 2X according to the second embodiment will be described.

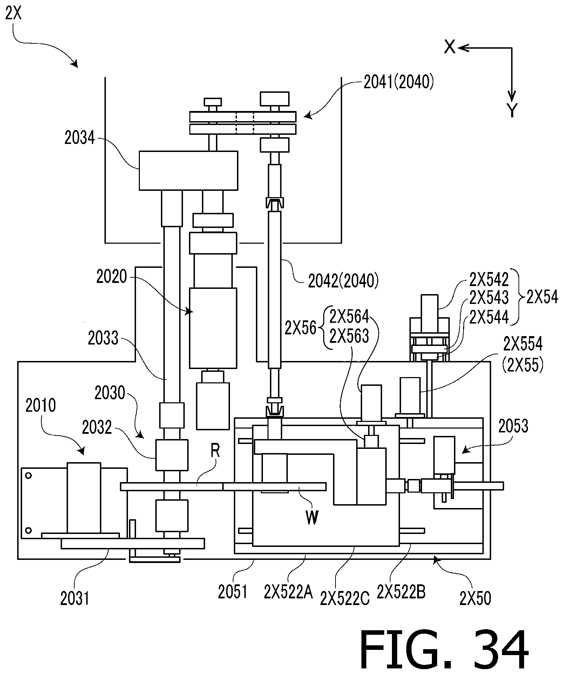

FIG. 34 is a plan view showing a schematic configuration of the wheel testing device 2X according to the second embodiment of the present invention. FIG. 35 is a front view showing a schematic configuration of the wheel testing device 2X.

The wheel testing device 2X includes a wheel support part 2X50 obtained by adding a lateral pressure applying function, an attack angle applying function, and a cant angle applying function to the wheel support part 2050 of the first embodiment.

As shown in FIG. 34, the wheel support part 2X50 of the wheel testing device 2X includes, in addition to the wheel load applying part 2053, a lateral pressure applying part 2X54, a cant angle applying part 2X55, and an attack angle applying part 2X56. As shown in FIG. 35, the wheel support part 2X50 includes three movable bases (a first movable base 2X522A, a second movable base 2X522B, and a third movable base 2X522C).

The lateral pressure applying part 2X54 is a mechanism for applying a lateral force (thrust load) to the test wheel W. The lateral pressure includes a lateral creep force (a component of the adhesive force in an axial direction of the test wheel W) and a flange reaction force (an action generated by a contact between a flange of the test wheel W and a gauge corner of the rail wheel R), and the latter, flange reaction force is applied by the lateral pressure applying part 2X54.

The lateral pressure applying part 2X54 includes a plurality of (for example, three) linear guides 2X541 that support the first movable base 2X522A to be movable in the Y-axis direction with respect to the fixed base 2051, a motor 2X542 (FIG. 34) attached to the fixed base 2051, a motion converter 2X543 that converts a rotational motion of the motor 2X542 into a linear motion in the Y-axis direction, and a lateral pressure detector 2X544 (FIG. 34) that detects a lateral pressure acting on the test wheel W. The linear guide 2X541 is a guideway-type circulating rolling bearing having the same configuration as the linear guide 2521, but a linear guide mechanism of another type may be used as the linear guide 2X541.

In the present embodiment, the lateral pressure detector 2X544 (second lateral pressure detecting means) is used to detect the lateral pressure when applying the flange reaction force, and the three component force sensor 2529 (first lateral pressure detecting means) is used to detect the lateral pressure when not applying the flange reaction force. The lateral pressure detector 2X544 may not be provided in the wheel testing device 2X, and the three component force sensor 2529 may be used to detect the lateral pressure when applying the flange reaction force. The lateral pressure detector 2X544 may be used to detect the lateral pressure when not applying the flange reaction force. The three component force sensor 2529 may be used to detect the dynamic lateral pressure (mainly the lateral creep force) while detecting the static lateral pressure (mainly the flange reaction force) with the lateral pressure detector 2X544.

Although the motor 2542 of the present embodiment is an AC servo motor, another type of electric motor of which drive amount (rotation angle) can be controlled, such as a DC servo motor or a stepping motor, may be used as the motor 2542.

The motion converter 2543 of the present embodiment is a feed screw mechanism such as a ball screw, but another type of motion converter may be used. The screw shaft 2543a of the motion converter 2543 is rotatably supported by a pair of bearings attached to the fixed base 2051, and one end of the screw shaft 2543a is connected to a shaft of the motor 2542. A nut 2543b (linear motion part) of the motion converter 2543 is fixed to the first movable base 2X522A via the lateral pressure detector 2X544. When the screw shaft 2543a is rotated by the motor 2542, the first movable base 2X522A moves in the Y-axis direction together with the nut 2543b. As a result, the test wheel W supported by the first movable base 2X522A also moves in the Y-axis direction, and a position of the test wheel W in an axial direction of the rail wheel R changes. When the test wheel W is moved in the Y-axis direction and the flange of the test wheel W is brought into contact with the rail wheel R, the flange reaction force is applied to the test wheel W. A magnitude of the flange reaction force changes depending on the position of the test wheel W in the Y-axis direction.

As shown in FIG. 33, the motor 2542 is connected to the controller 2072 via a servo amplifier 2542a. The lateral pressure detector 2X544 is connected to the measurement part 2074 via an amplifier 2544a. Phase information of a shaft detected by a built-in rotary encoder RE of the motor 2542 is input to the controller 2072 via the servo amplifier 2542a.

The measurement part 2074 measures the lateral pressure applied to the test wheel W based on a signal of the lateral pressure detector 2X544. The controller 2072 controls the driving of the motor 2X542 based on setting data of the lateral pressure input through the interface part 2076 and the measurement result of the lateral pressure by the measurement part 2074 so that the set lateral pressure is applied to the test wheel W.

The cant angle applying part 2X55 is a mechanism having a function of applying a cant angle to the test wheel W. As shown in FIG. 35, the cant angle applying part 2X55 includes a vertically extending swing support shaft 2X551 attached to one of the first movable base 2X522A and the second movable base 2X522B, and a bearing 2X552 attached to the other of the first movable base 2X522A and the second movable base 2X522B and that rotatably supports the swing support shaft 2X551. The second movable base 2X522B is supported by the swing support shaft 2X551 and the bearing 2X552 so as to be rotatable about a rotation axis A1 of the bearing 2X552 which is a vertical line.

The bearing 2X552 is disposed substantially immediately below a contact position P where the test wheel W contacts the rail wheel R (in the present embodiment, a right end of the rail wheel R) so that the rotation axis A1 passes through the contact position P. The rotation axis A1 is a tangent line of the rail wheel R and the test wheel W at the contact position P. Therefore, when the second movable base 2X522B rotates about the rotation axis A1, the test wheel W swings around the Z-axis about the contact position P (in other words, the test wheel W and the rail wheel R rotationally move around a common tangent line), and an inclination (i.e., cant angle) with respect to the rail wheel R about the tangent line changes.

The cant angle applying part 2X55 includes a curved guide 2X553 that supports the second movable base 2X522B at an outer peripheral portion away from the rotation axis A1 so as to be swingable about the rotation axis A1 with respect to the first movable base 2X522A. The curved guide 2X553 is a guideway-type circulating rolling bearing including a curved rail (guideway) and a carriage that can travel on the rail via rolling bodies, but another type of curved guide mechanism may be used as the curved guide 2X553.

The cant angle applying part 2X55 includes a motor 2X554 (FIG. 34), and a motion converter 2555 that converts a rotational motion of the motor 2X554 into a linear motion in the Y-axis direction. The motor 2X554 of the present embodiment is an AC servo motor, but another type of electric motor of which drive amount (rotation angle) can be controlled, such as a DC servo motor or a stepping motor, may be used as the motor 2X554. The motion converter 2555 of the present embodiment is a feed screw mechanism such as a ball screw, but another type of motion converter may be used.

A threaded shaft 2555a of the motion converter 2555 is rotatably supported by a pair of bearings, and one end of the threaded shaft 2555a is connected to a shaft of the motor 2554. the motor 2X554 and the pair of bearings of the motion converter 2555 are attached to a rotary table rotatable about a vertical shaft mounted on the first movable base 2X522A. The motor 2X554 is disposed such that its shaft perpendicularly intersects the rotation axis of the rotary table.

As shown in Fig. 35, a nut 2X555b (linear motion part) of the motion converter 2X555 is connected to the second movable base 2X522B via a hinge 2X556 so as to be rotatable about a vertical axis. When the screw shaft 2X555a is rotated by the motor 2X554, the hinge 2X556 attached to the second movable base 2X522B moves substantially in the Y-axis direction together with the nut 2X555b. As a result, the second movable base 2X522B rotates about the rotation axis A1, the test wheel W supported by the second movable base 2X522B swings about the contact position P, and the cant angle changes.

As shown in Figure 33, the motor 2X554 is connected to the controller 2072 via a servo amplifier 2X554a. Phase information of the shaft detected by a built-in rotary encoder RE of the motor 2X542 is input to the controller 2072 via the servo amplifier 2X542a.

The controller 2072 calculates a current value of the cant angle based on a signal from the built-in rotary encoder RE of the motor 2554. The controller 2072 controls driving of the motor 2X554 based on setting data of the cant angle input through the interface part 2076 and the current value of the cant angle so that a set cant angle is given to the test wheel W.

The attack angle applying part 2X56 is a mechanism having a function of applying an attack angle to the test wheel W. An attack angle is an angle between a rail and a wheel, and more specifically, an angle (i.e., an angle in a yawing direction) around a vertical axis between a width direction (rail ties direction) of the rail and an axial direction of the wheel. In the wheel testing device 2X, the attack angle is defined as an angle around the X-axis between a rotation axis of the rail wheel R and a rotation axis of the test wheel W.

As shown in FIG. 35, a support frame 2X523 of the wheel support part 2X50 of the present embodiment includes a box-shaped support column 2X523a fixed to the third movable base 2X522C, and an arm 2X523b connected to the support column 2X523a so as to be rotatable about a rotation axis A2 extending in the X-axis direction. Similarly to the arm 2523b of the first embodiment, the arm 2X523b is a substantially L-shaped member as viewed from above, and has a base part 2X523b1 connected to an upper portion of the support column 2X523a and extending in the Y-axis direction, and a trunk part 2X523b2 extending leftward from a rear end portion of the base part 2X523b1.

A swing support shaft 2X561 projects in the X-axis direction from a right end of the base part 2X523b1. A bearing 2X562 that rotatably supports the swing support shaft 2X561 is attached to an upper portion of the support column 1523a. The arm 1523b is supported by the bearing 2X562 via the swing support shaft 2X561 so as to be rotatable about the rotation axis A2 extending in the Y-axis direction. The bearing 2X562 is disposed so that the rotation axis A2 passes through the contact position P. That is, the rotation axis A2 is a straight line passing vertically through a tread of the test wheel W. The swing support shaft 2X561 and the bearing 2562 constitute a portion of the attack angle applying part 2X56.

As shown in FIG. 34, the attack angle applying part 2X56 includes a motor 2X564, and a motion converter 2X563 that converts rotational motion of the motor 2X564 into a linear motion in the Z-axis direction. The motor 2X564 of the present embodiment is an AC servo motor, but another type of electric motor of which drive amount (rotation angle) can be controlled, such as a DC servo motor or a stepping motor, may be used as the motor 2X564. The motion converter 2X563 of the present embodiment is a feed screw mechanism, such as a ball screw, but another type of motion converter may be used.

A screw shaft of the motion converter 2X563 is rotatably supported by a pair of bearings, and one end of the screw shaft is connected to a shaft of the motor 2X564 via a bevel gear. The screw shaft of the motion converter 2563 may be directly connected to the shaft of the motor 2X564. The motor 2X564 and the motion converter 2X563 are attached to a swinging frame connected to the third movable base 2X522C via a hinge having a rotation axis extending in the X-axis direction so as to be rotatable (i.e., swingable) about the rotation axis of the hinge within a certain angle range.

A nut (linear motion part) of the motion converter 2X563 is connected to the arm 1523b of the support frame 1523 via a hinge having a rotation axis extending in the X-axis direction so as to be swingable about the rotation axis of the hinge. When the screw shaft of the motion converter 2X563 is rotated by the motor 2564, the hinge attached to the arm 1523b together with the nut moves in the Z-axis direction. As a result, the test wheel W supported by the arm 1523b rotationally moves about the rotation axis A2 passing through the contact position P (in other words, about a straight line perpendicular to the tread of the test wheel) together with the arm 1523b, and the attack angle is given.

As shown in FIG. 33, the motor 2X564 is connected to the controller 2072 via a servo amplifier 2X564a. Phase information of a shaft detected by a built-in rotary encoder RE of the motor 2X564 is input to the controller 2072 via the servo amplifier 2X564a.

The controller 2072 calculates a current value of the attack angle based on a signal from the built-in rotary encoder RE of the motor 2X564. The controller 2072 controls driving of the motor 2X564 based on setting data of the attach angle input through the interface part 2076 and the current value of the attack angle so that the set attack angle is given to the test wheel W.

As shown in FIG. 35, the linear motion part 2532a of the motion converter 2532 of the wheel load applying part 2053 is fixed to the support column 3523a of the support frame 3523 via the wheel load detector 2533. The linear motion part 2532a of the motion converter 2532 is disposed so that a center line thereof coincides with the rotation axis A2. This prevents a large moment of force from acting on the support frame 1523 when applying the wheel load.

The above is the description of the embodiments of the present invention. The embodiments of the present invention are not limited to those described above, and various modifications are possible. For example, the embodiments of the present invention include configurations such as appropriate combinations of the configurations of the embodiments and the like explicitly shown by way of example in the present specification and/or configurations of embodiments and the like obvious to a person skilled in the art from the description in the present specification.

In the embodiment described above, the first testing device 1 is provided with two belt mechanisms 15. However, the first testing device 1 may be provided with one or three or more belt mechanisms 15.

In the embodiment described above, the belt mechanism 15 is driven by the power generated by the pair of drive parts 14. However, the belt mechanism 15 may be driven by one or three or more drive parts 14.

In the embodiment described above, a toothed belt and a toothed pulleys are used in each of the belt mechanisms 15, 24, and 25. However, a flat belt, a V-belt, or a V-ribbed belt having a plurality of V-shaped ribs arranged in the width direction may be used in place of the toothed belt for one or more of the belt mechanisms. A general-purpose belt provided with core wires formed by twisting glass fibers may also be used. Another type of winding transmission mechanism such as a chain transmission mechanism or a wire transmission mechanism, or another type of power transmission mechanism such as a ball screw mechanism, a gear transmission mechanism, or a hydraulic mechanism may be used in place of each belt mechanism.

In the embodiment described above, the power for driving the carriage 20 and the power for driving the test wheel W (spindle 52) are supplied by the common drive parts 14 and transmitted by the common belt mechanisms 15, but the present invention is not limited to this configuration. For example, the power for driving the carriage 20 and the power for driving the test wheel W may be generated by separate drive parts and transmitted by separate power transmission means (e.g., separate belt mechanisms). In this case, in order to match the traveling speed of the carriage 20 and the peripheral speed of the test wheel W, it is necessary to synchronously control the driving of the drive part for driving the carriage and the drive part for driving the test wheel.

In the embodiment described above, a mechanism for driving the carriage 20 (carriage driving means) and a portion of a mechanism for driving the test wheel W (test wheel driving means) (i.e., the drive parts 14 and the belt mechanisms 15) are shared, thereby realizing a simple driving system and a simple control system. The sharing of the carriage driving means and the test wheel driving means (in particular, the sharing of the drive parts 14) is made possible by introducing the torque generator 30 and separating the power sources for the speed control and the torque control of the test wheel W, thereby reducing the load on the drive parts 14.

In the embodiment described above, a configuration in which the drive parts 14RA and 14RB on the right side serve both as a carriage driving means and a rotational motion supplying means, and the drive parts 14LA and 14LB on the left side serve as a carriage driving means is adopted. However, the present invention is not limited to this configuration. For example, a configuration in which the drive parts 14LA and 14LB on the left side serve both as a carriage driving means and a rotational motion supplying means, and the drive parts 14RA and 14RB on the right side serve as a carriage driving means may be adopted. Alternatively, a configuration in which both the drive parts 14LA and 14LB on the left side and the drive parts 14RA and 14RB on the right side serve as a carriage driving means and a rotational motion supplying means may be adopted. This configuration is realized, for example, by connecting a total of two shafts 223B of the first driven parts 22 and 22L (in other words, replacing with one long shaft 223B connecting the first driven parts 22 and 22L on the left and on the right).

In the embodiment described above, the rod 124a or the like is supported by the pair of single-row bearings 127a or the like in the guide mechanism 12 of the guide part. However, the present invention is not limited to this configuration. For example, the rod may be supported by one or more double-row or single-row bearings.

In the embodiment described above, the heat-treated rail is used in the guide mechanism 12 of the guide part 10. However, the present invention is not limited to this configuration. For example, a normal rail (JIS E 1101:2001) or a light rail (JIS E 1103:1993) may be used. In addition, the present invention is not limited to the flat-bottomed rail, and a rail having other shapes such as a double-headed rail, a bull-headed rail, or a bridge-shaped rail may be used.

In the embodiment described above, the motor 141 (AC servo motor) is used in the drive part 14. However, the present invention is not limited to this configuration. In place of the AC servo motor, another type of motor of which speed control or position control is possible (e.g., a DC servo motor, a so-called inverter motor in which an inverter circuit is combined with an AC motor or a brushless motor, or the like) may be used.

In the embodiment described above, the motors 32, 451, and 461, which are AC servo motors, are used in the torque generator 30, the wheel load adjusting part 42, and the slip angle adjusting part 46, respectively. However, the present invention is not limited to this configuration. In place of the AC servo motor, another type of motor of which position control is possible (e.g., a DC servo motor or a stepping motor) may be used.

In the embodiments described above, the wheel load applying part 2053 is provided to the wheel support part 2050 (2X50), and the wheel load is adjusted by moving the test wheel W forward and backward with respect to the rail wheel R. However, the present invention is not limited to this configuration. For example, the wheel load applying part may be provided to the rail wheel support part, and the wheel load may be adjusted by moving the rail wheel R forward and backward with respect to the test wheel W.

In the embodiments described above, the rail wheel R is connected to the rotary drive device 2010 via the torque generator 2020, and the test wheel W is connected to the rotary drive device 2010 via the torque generator 2020. However, the present invention is not limited to this configuration. For example, the rail wheel R may be connected to the rotary drive device 2010 via the torque generator 2020, and the test wheel W may be connected to the rotary drive device 2010 without the torque generator 2020. Alternatively, two torque generators 2020 may be provided, and the rail wheel R may be connected to the rotary drive device 2010 via one torque generator 2020, and the test wheel W may be connected to the rotary drive device 2010 via the other torque generator 2020.

In the embodiments described above, a configuration in which a plurality of three component force sensors are provided in the wheel support part 2050 (2X50) and the measurement part 2074 measures the torque and the wheel load acting on the test wheel W based on the detection results by the plurality of three component force sensors is adopted. However, the present invention is not limited to this configuration. For example, the torque and the wheel load may be measured based on detection results of a plurality of two component force sensors or one component force sensors.

In the embodiments described above, the function of the power distributing means is incorporated in the rail wheel support part 2032. However, the power distributing means may be separated from the rail wheel support part 2032. For example, the first transmission part 2030 and the rail wheel support part 2032 may be connected via an additional power transmission means (e.g., a winding transmission or a gear transmission). In this case, pulleys or gears of the additional power transmission means attached to the shaft of the first transmission part 2030 serves as the power distributing means.

In the second embodiment described above, the fixed base 2051 and the spindle 2527 are connected via the lateral pressure applying part 2X54, the cant angle applying part 2X55, the wheel load applying part 2X53, and the attack angle applying part 2X56 in this order. However, the present invention is not limited to this configuration. The lateral pressure applying part 2054, the cant angle applying part 2X55, the wheel load applying part 2053, and the attack angle applying part 2X56 may be connected in any order.

**Claims**

1. A wheel testing system comprising:

    a first testing device including a rail on which a test wheel rolls;
    a second testing device including a rail wheel that rotates together with the test wheel while being in contact with the test wheel; and
    a test data processing device that processes test data obtained by the first testing device and the second testing device,
    wherein the test data processing device converts a test result by the second testing device into a test result by the first testing device based on the test result by the first testing device and the test result by the second testing device.

2. The wheel testing system according to claim 1,

    wherein the first testing device includes:

        a carriage that rotatably holds the test wheel and is capable of traveling along the rail with the test wheel in contact with the rail; and
        test wheel driving means that drives the test wheel,

    wherein the test wheel driving means includes:

        rotational motion supplying means that supplies a rotational motion of a rotation speed corresponding to a speed of the carriage; and
        a slip ratio control device that controls a slip ratio between the rail and the test wheel by changing a phase of the rotational motion supplied from the rotational motion supplying means.

3. The wheel testing system according to claim 1,

    wherein the first testing device includes:

        a carriage that rotatably holds the test wheel and is capable of traveling along the rail with the test wheel in contact with the rail; and
        test wheel driving means that drives the test wheel,

    wherein the test wheel driving means includes:

        rotational motion supplying means that supplies a rotational motion of a rotation speed corresponding to a speed of the carriage;

and

torque generating means that generates a predetermined torque to be applied to the test wheel by changing a phase of the rotational motion supplied from the rotational motion supplying means.

4. The wheel testing system according to any one of claims 1 to 3,

wherein the second testing device includes:

a rail wheel support part that rotatably supports the rail wheel;
a wheel support part that rotatably supports the test wheel such that the test wheel is in contact with the rail wheel;
a first electric motor that rotates the rail wheel and the test wheel; and
a slip ratio control device that controls a slip ratio between the test wheel and the rail wheel,

wherein the slip ratio control device includes:

a rotating frame rotationally driven by the first electric motor; and
a second electric motor attached to the rotating frame,

wherein at least one of the rail wheel and the test wheel is connected to the first electric motor via the slip ratio control device.

5. The wheel testing system according to any one of claims 1 to 3,

wherein the second testing device includes:

a rail wheel support part that rotatably supports the rail wheel;
a wheel support part that rotatably supports the test wheel such that the test wheel is in contact with the rail wheel;
a first electric motor that rotates the rail wheel and the test wheel; and
a torque generator that controls a slip ratio between the test wheel and the rail wheel,

wherein the torque generator includes:

a rotating frame that is rotationally driven by the first electric motor; and
a second electric motor attached to the rotating frame,

wherein at least one of the rail wheel and the test wheel is connected to the first electric motor via the torque generator.

FIG. 1

EP 4 414 682 A1

FIG. 2

EP 4 414 682 A1

FIG. 3

FIG. 4

FIG. 5

EP 4 414 682 A1

FIG. 6

EP 4 414 682 A1

A–A

FIG. 7

B–B

FIG. 8

FIG. 9

FIG. 10

EP 4 414 682 A1

FIG. 11

FIG. 12

FIG. 13

FIG. 14

FIG. 15

FIG. 16

FIG. 17

FIG. 18

EP 4 414 682 A1

FIG. 19

EP 4 414 682 A1

FIG. 20

EP 4 414 682 A1

B–B

431

214(21)

432c

422b

432a

43

432b

422a

432

432d

422b

421

# FIG. 21

C-C

FIG. 22

D-D

FIG. 23

FIG. 24

FIG. 25

FIG. 26

FIG. 27

EP 4 414 682 A1

FIG. 28

**FIG. 29**

**FIG. 30**

FIG. 31

EP 4 414 682 A1

FIG. 32

EP 4 414 682 A1

FIG. 33

EP 4 414 682 A1

FIG. 34

# FIG. 35

EP 4 414 682 A1

## INTERNATIONAL SEARCH REPORT

| International application No. |
| --- |
| **PCT/JP2022/037742** |

**A. CLASSIFICATION OF SUBJECT MATTER**

*G01M 17/10*(2006.01)i
FI:   G01M17/10

According to International Patent Classification (IPC) or to both national classification and IPC

**B. FIELDS SEARCHED**

Minimum documentation searched (classification system followed by classification symbols)

G01M17/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2007-132885 A (RAILWAY TECHNICAL RES INST) 31 May 2007 (2007-05-31) paragraphs [0001]-[0005], fig. 1-5 | 1, 4-5 |
| A | JP 2005-274211 A (RAILWAY TECHNICAL RES INST) 06 October 2005 (2005-10-06) entire text, all drawings | 1-5 |
| A | JP 2007-271447 A (RAILWAY TECHNICAL RES INST) 18 October 2007 (2007-10-18) entire text, all drawings | 1-5 |
| A | JP 2006-90972 A (RAILWAY TECHNICAL RES INST) 06 April 2006 (2006-04-06) entire text, all drawings | 1-5 |
| A | JP 2018-119814 A (SUMITOMO RUBBER IND) 02 August 2018 (2018-08-02) entire text, all drawings | 1-5 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 November 2022** | **20 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/037742**

| Patent document cited in search report | | | Publication date (day/month/year) | Patent family member(s) | Publication date (day/month/year) |
|---|---|---|---|---|---|
| JP | 2007-132885 | A | 31 May 2007 | (Family: none) | |
| JP | 2005-274211 | A | 06 October 2005 | (Family: none) | |
| JP | 2007-271447 | A | 18 October 2007 | (Family: none) | |
| JP | 2006-90972 | A | 06 April 2006 | (Family: none) | |
| JP | 2018-119814 | A | 02 August 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007271447 A